(19) Europäisches Patentamt
European Patent Office
Office européen des brevets

(11) **EP 4 519 134 B1**

(12) **EUROPÄISCHE PATENTSCHRIFT**

(45) Veröffentlichungstag und Bekanntmachung des Hinweises auf die Patenterteilung:
**31.12.2025   Patentblatt 2026/01**

(21) Anmeldenummer: **23814443.0**

(22) Anmeldetag: **29.11.2023**

(51) Internationale Patentklassifikation (IPC):
**B60W 30/095** *(2012.01)*   **B60W 30/18** *(2012.01)*
**B60W 40/04** *(2006.01)*   **B60W 50/00** *(2006.01)*
**B60W 60/00** *(2020.01)*

(52) Gemeinsame Patentklassifikation (CPC):
**B60W 30/18163; B60W 30/095; B60W 30/0953;**
**B60W 30/0956; B60W 40/04; B60W 50/0097;**
**B60W 60/0015; B60W 60/0027;** B60W 2554/4042;
B60W 2554/4045; B60W 2554/80; B60W 2554/802;
B60W 2554/804

(86) Internationale Anmeldenummer:
**PCT/EP2023/083547**

(87) Internationale Veröffentlichungsnummer:
**WO 2024/120930 (13.06.2024 Gazette 2024/24)**

(54) **VERFAHREN ZUR SICHERHEITSBEWERTUNG EINES SPURWECHSELMANÖVERS IM AUTOMATISIERTEN FAHRBETRIEB EINES FAHRZEUGES**

METHOD FOR EVALUATING THE SAFETY OF A LANE-CHANGE MANEUVER IN THE AUTOMATED DRIVING MODE OF A VEHICLE

PROCÉDÉ D'ÉVALUATION DE LA SÉCURITÉ D'UNE MANOEUVRE DE CHANGEMENT DE VOIE DANS LE MODE DE CONDUITE AUTOMATISÉ D'UN VÉHICULE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **05.12.2022   DE 102022004543**

(43) Veröffentlichungstag der Anmeldung:
**12.03.2025   Patentblatt 2025/11**

(73) Patentinhaber: **Mercedes-Benz Group AG**
**70372 Stuttgart (DE)**

(72) Erfinder:
• **VASILE, Laurin**
**70197 Stuttgart (DE)**
• **SEEMANN, Maximilian**
**48249 Dülmen (DE)**

(74) Vertreter: **Novagraaf Group**
**Chemin de l'Echo 3**
**1213 Onex / Geneva (CH)**

(56) Entgegenhaltungen:
EP-A1- 3 579 211        US-A1- 2010 228 419
US-A1- 2021 197 858

**Beschreibung**

Die Erfindung betrifft Verfahren zur Sicherheitsbewertung eines Spurwechselmanövers im automatisierten Fahrbetrieb eines Fahrzeuges mit einer Umgebungssensorik, wobei anhand erfasster Signale der Umgebungssensorik eine Umgebung des Fahrzeuges und sich in dieser befindende Objekte detektiert werden.

Aus der US 8,244,408 B2 ist ein Verfahren zur Bewertung eines mit einem Fahrbetrieb eines autonomen Fahrzeugsteuerungssystems verbundenen Risikos bekannt. Ein Fahrzeug ist konfiguriert, ein autonomes Spurwechselmanöver auszuführen, und ist mit einem Überwachungssystem ausgestattet. Dabei wird jedes von mehreren Objekten, die sich in der Nähe des Fahrzeuges befinden, überwacht. Orte jedes der Objekte werden relativ zu einer projizierten Trajektorie des Fahrzeuges vorhergesagt und ein Kollisionsrisikoniveau zwischen dem Fahrzeug und jedem der Objekte wird bewertet.

Darüber hinaus beschreibt die EP 3 281 831 A1 ein Steuerungssystem und ein Steuerungsverfahren zum Ermitteln einer Wahrscheinlichkeit für einen Fahrspurwechsel eines vorausfahrenden Kraftfahrzeuges. Das Steuerungssystem ist dazu ausgebildet, ein am Verkehr teilnehmendes anderes Kraftfahrzeug vor dem eigenen Kraftfahrzeug mittels des mindestens einen Umfeldsensors zu erfassen, eine seitliche Bewegung des anderen Kraftfahrzeuges relativ zu einer Fahrspur zu ermitteln, auf der sich das andere Kraftfahrzeug oder das eigene Kraftfahrzeug befindet, und eine bewegungsbasierte Wahrscheinlichkeit für einen Fahrspurwechsel des anderen Kraftfahrzeuges anhand der ermittelten seitlichen Bewegung des anderen Kraftfahrzeuges zu berechnen. Ferner ist das Steuerungssystem dazu eingerichtet und bestimmt, nach Maßgabe der mittels des Umfeldsensors gewonnenen Umfelddaten eine aktuelle Verkehrssituation zu ermitteln, eine verkehrssituationsbasierte Wahrscheinlichkeit für einen Fahrspurwechsel des anderen Kraftfahrzeuges anhand der ermittelten aktuellen Verkehrssituation zu berechnen, und eine Gesamtwahrscheinlichkeit für einen Fahrspurwechsel des anderen Kraftfahrzeuges anhand der bewegungsbasierten Wahrscheinlichkeit und der verkehrssituationsbasierten Wahrscheinlichkeit zu berechnen.

Weiterhin ist aus der US 2010 / 0 228 419 A1 ein Verfahren zur Bewertung eines Kollisionsrisikos im Zusammenhang mit einem Betrieb eines Fahrzeugs bekannt, wobei das Fahrzeug zur Ausführung eines autonomen Spurwechselmanövers ausgebildet. Das Verfahren umfasst die Schritte:

- Überwachen jedes einer Vielzahl von Objektfahrzeugen, die sich in der Nähe des Fahrzeugs befinden;
- Vorhersagen der Standorte jedes der Objektfahrzeuge relativ zu einer projizierten Trajektorie des Fahrzeugs in zukünftigen Zeitschritten; und
- Bewerten eines Kollisionsrisikoniveaus zwischen dem Fahrzeug und jedem der Objektfahrzeuge in den zukünftigen Zeitschritten.

Die DE 10 2019 129 879 A1 beschreibt ein Verfahren zum automatisierten Steuern eines Kraftfahrzeugs, das auf einer Straße in einer momentanen Fahrspur fährt, wobei die Straße eine weitere Fahrspur aufweist. Das Verfahren umfasst die Schritte:

- Generieren und Empfangen von zwei vorläufigen Fahrmanövern, die einen Wechsel von der momentanen Fahrspur in die weitere Fahrspur und einen Startzeitpunkt des Wechsels umfassen, wobei die Startzeitpunkte der zwei vorläufigen Fahrmanöver an unterschiedlichen Zeitpunkten liegen;
- Vergleichen der beiden Fahrmanöver unter Berücksichtigung der jeweiligen Startzeitpunkte; und
- Auswählen eines der Startzeitpunkte basierend auf dem Vergleich.

Weiterhin beschreibt die DE 196 47 430 A1 ein Verfahren zum selbsttätigen Bremsen eines personengeführten Kraftfahrzeugs, bei dem eine Relativgeschwindigkeit zu einem sich etwa in Fahrtrichtung vor dem Fahrzeug befindenden Hindernis ermittelt wird. Zusätzlich wird ein Abstand zwischen Fahrzeug und Hindernis ermittelt, wobei der ermittelte Abstand mit einem Bremsweg des Fahrzeugs bei einer Geschwindigkeit verglichen wird, die etwa der Relativgeschwindigkeit entspricht. In Abhängigkeit von dem Vergleichsergebnis wird ein selbsttätiger Bremsvorgang durchgeführt, wenn der ermittelte Abstand kleiner als der Bremsweg ist.

Der Erfindung liegt die Aufgabe zugrunde, ein neuartiges Verfahren zur Sicherheitsbewertung eines Spurwechselmanövers im autonomen Fahrbetrieb eines Fahrzeuges anzugeben.

Die Aufgabe wird erfindungsgemäß durch ein Verfahren gelöst, welches die in Anspruch 1 angegebenen Merkmale aufweist.

Vorteilhafte Ausgestaltungen der Erfindung sind Gegenstand der Unteransprüche.

Ein Verfahren zur Sicherheitsbewertung eines Spurwechselmanövers im autonomen Fahrbetrieb eines Fahrzeuges mit einer Umgebungssensorik, wobei anhand erfasster Signale der Umgebungssensorik eine Umgebung des Fahrzeuges und sich in dieser befindende Objekte detektiert werden, sieht vor, dass

- vor einem eingeleiteten Spurwechselmanöver des Fahrzeuges von einer linken Fahrspur auf eine mittlere Fahrspur oder von einer rechten Fahrspur auf eine mittlere Fahrspur eines mehrspurigen Fahrbahnabschnittes mittels hypothetischer Spurwechselmanöver von weiteren Fahrzeugen auf der rechten Fahrspur oder der linken Fahrspur ein Kollisionsrisiko ermittelt wird, wobei
- basierend auf einer maximalen Spurwechseldauer und eines Einschermomentes Längsbeschleunigungen berechnet werden, die zu einer Kollision aufgrund einer Überlappung von Fahrzeugflächen des Fahrzeuges und der weiteren Fahrzeuge führen,
- eine Durchführung des Spurwechselmanövers in Abhängigkeit einer relativen Längsposition des Fahrzeuges zu den weiteren Fahrzeugen und relativen Längsgeschwindigkeiten des Fahrzeuges zu den weiteren Fahrzeugen zum Beginn eines Spurwechselmanövers anhand einer Kollisionswahrscheinlichkeit als Sicherheitsmaß und eines minimalen Abstandes bei Nichteintritt einer Kollision als weiteres Sicherheitsmaß bewertet wird und
- bei einer Ermittlung der Kollisionswahrscheinlichkeit eine Höhe eines Ruckes einer Längsbeschleunigung der weiteren Fahrzeuge berücksichtigt wird, wobei
- die Längsbeschleunigung des Fahrzeuges derart optimiert wird, dass eine minimale Längsbeschleunigung und eine maximale Längsbeschleunigung der weiteren Fahrzeuge einen Längsbeschleunigungsänderungsaufwand erfordern, welcher jeweils eine statistisch geringe Kollisionswahrscheinlichkeit aufweist.

Erfindungsgemäß wird die Kollisionswahrscheinlichkeit als Sicherheitsmaß anhand

- einer zuvor ermittelten Wahrscheinlichkeit erwartbarer Längsbeschleunigungen der weiteren Fahrzeuge,
- einer Ausgangssituation,
- einer geometrischen Fahrzeuginformation des Fahrzeuges und einer geometrischen Fahrzeuginformation der weiteren Fahrzeuge,
- von Startzeitpunkten der hypothetischen Spurwechselmanöver der weiteren Fahrzeuge,
- einer Zeitdauer des Spurwechselmanövers und
- einer geplanten Längsbeschleunigung des Fahrzeuges ermittelt.

Insbesondere sieht das Verfahren vor, dass schon vor Spurwechselbeginn des Fahrzeuges überprüft werden kann, ob ein Spurwechsel selbst dann noch sicher durchgeführt werden kann, wenn sich das Fahrzeug bei einer Prädiktion von Spurwechselmanövern in Bezug auf die weiteren Fahrzeuge verschätzen sollte beziehungsweise ein Spurwechsel aus einem Kontext nicht vorhersehbar ist. Aus diesem Grund wird die Kollisionswahrscheinlichkeit nur anhand der Längsdynamik ermittelt, da eine Durchführung eines Spurwechsels weiterer Fahrzeuge nicht vorhergesagt werden kann. Dabei ist unter Längsdynamik sowohl die Längsbeschleunigung als auch der Ruck zu verstehen.

Durch Anwendung des Verfahrens werden Längsbeschleunigungsoptimierungen des automatisierten Fahrzeuges auf Basis einer tatsächlichen, insbesondere gemessenen, initialen Längsbeschleunigung eines potentiellen in die Fahrspur des automatisierten Fahrzeuges einscherenden weiteren Fahrzeuges so gestaltet, dass die Längsbeschleunigung der potentiellen einscherenden Fahrzeuge einen Längsbeschleunigungsänderungsaufwand benötigt, der eine statistisch niedrige Auftrittswahrscheinlichkeit aufweist, so dass die Kollisionswahrscheinlichkeit reduziert ist.

Dabei ist unter Ruck eine momentane zeitliche Änderungsrate einer Beschleunigung eines Körpers zu verstehen. Insbesondere bei einem Fahrzeug mit Elektroantrieb resultiert aus einer Beschleunigungsänderung ein Längsruck.

Insbesondere kann durch die Anwendung des Verfahrens ein Kollisionsrisiko eines Fahrzeuges auf taktischer Ebene für eine Durchführung eines Spurwechselmanövers auf die mittlere Fahrspur bewertet/quantifiziert werden.

Ein System des Fahrzeuges zum automatisierten, insbesondere zum autonomen Fahrbetrieb kann durch eine Anpassung seines Sollverhaltens das Kollisionsrisiko schon vor dem Spurwechselmanöver verringern oder einen Beginn des Spurwechselmanövers zeitlich verschieben, wenn sowohl ein positiver als auch ein negativer Beschleunigungsaufwand für das Fahrzeug zu hoch ist und/oder bis sich eine Ausgangslage für einen sicheren Spurwechsel verbessert hat.

Ausführungsbeispiele der Erfindung werden im Folgenden anhand von Zeichnungen näher erläutert.

Dabei zeigen:

Fig. 1    schematisch einen Fahrbahnabschnitt mit drei Fahrspuren und zwei Fahrzeugen,

Fig. 2    schematisch zwei Abbildungen des Fahrbahnabschnittes mit ein und derselben Ausgangssituation und veränderter Längsbeschleunigung,

Fig. 3    schematisch eine Herleitung des Einschermomentes in einer bestimmten Situation

Fig. 4    schematisch eine Herleitung des Einschermomentes in einer weiteren bestimmten Situation,

Fig. 5 schematisch eine Herleitung des Einschermomentes in einer weiteren bestimmten Situation,

Fig. 6 schematisch eine Herleitung des Einschermomentes in einer weiteren bestimmten Situation,

Fig. 7 schematisch eine Darstellung von Startpositionsgrenzfällen und deren relativen Längsgeschwindigkeitsverläufen,

Fig. 8 schematisch eine Herleitung einer Kollisionswahrscheinlichkeit als Sicherheitsmaß,

Fig. 9 schematisch eine Darstellung einer Berechnung eines minimalen Abstandes zwischen dem Fahrzeug und einem nächstfahrenden weiteren Fahrzeug auf einer übernächsten Fahrspur als weiteres Sicherheitsmaß,

Fig. 10 schematische eine Darstellung unterschiedlicher Grenzfälle zur Berechnung von Längsbeschleunigungsgrenzen,

Fig. 11A schematisch ein Diagramm mit einer Kollisionswahrscheinlichkeitsdichte ohne Berücksichtigung eines Ruckes,

Fig. 11B schematisch ein weiteres Diagramm mit verschobener Kollisionswahrscheinlichkeitsdichte durch Anpassung einer Längsbeschleunigung des Fahrzeuges,

Fig. 12A schematisch ein Diagramm mit einer Kollisionswahrscheinlichkeitsdichte und Längsbeschleunigungsgrenzen,

Fig. 12B schematisch eine in einem Diagramm dargestellte Berechnung der Längsbeschleunigungsdifferenzen, die zur Berechnung von Ruckgrenzen verwendet werden und

Fig. 12C schematisch ein Diagramm mit Berücksichtigung einer Auftrittswahrscheinlichkeit eines Ruckes einer Längsbeschleunigung.

Einander entsprechende Teile sind in allen Figuren mit den gleichen Bezugszeichen versehen.

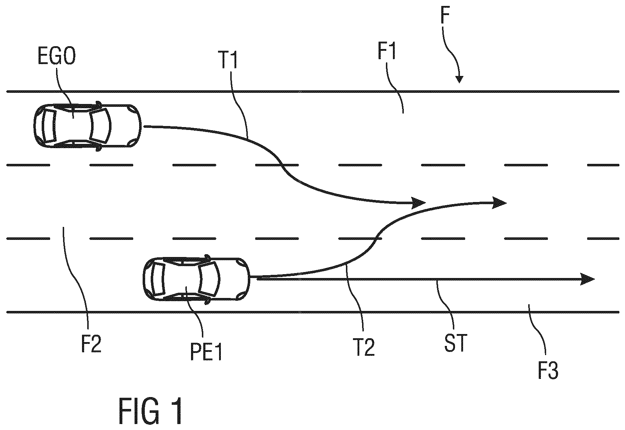

Figur 1 zeigt einen Fahrbahnabschnitt F mit drei in dieselbe Richtung verlaufenden Fahrspuren F1 bis F3. Auf einer linken Fahrspur F1 fährt ein Fahrzeug EGO im autonomen Fahrbetrieb und beabsichtigt ein Spurwechselmanöver auf eine mittlere Fahrspur F2 durchzuführen. Dabei ist eine Spurwechseltrajektorie T1 des Fahrzeuges EGO von der linken Fahrspur F1 auf die mittlere Fahrspur F2 dargestellt.

Auf einer rechten Fahrspur F3 fährt ein weiteres Fahrzeug PE1, welches gegebenenfalls, das heißt auch ohne eine erkennbare Intention, beabsichtigen kann, ein Spurwechselmanöver auf die mittlere Fahrspur F2 durchzuführen. Eine hypothetische Spurwechseltrajektorie T2 des weiteren Fahrzeuges PE1 von der rechten Fahrspur F3 auf die mittlere Fahrspur F2 ist ebenfalls dargestellt. Auch ist eine Spurfolgetrajektorie ST des weiteren Fahrzeuges PE1, welche ausschließlich die rechte Fahrspur F3 betrifft, in Figur 1 gezeigt.

Für einen automatisierten, insbesondere autonomen Fahrbetrieb eines Fahrzeuges EGO stellt ein Spurwechsel ein vergleichsweise komplexes Fahrmanöver dar. Hierfür ist es erforderlich, Längs- und Querbewegungen des Fahrzeuges EGO unter Berücksichtigung einer Umgebungssituation zu planen und umzusetzen.

Nach Donges und Michon ist bekannt, dass eine Bewertung eines Spurwechselmanövers auf drei Ebenen, nämlich einer strategischen, taktischen und operativen Ebene erfolgt. Eine folgende Problembeschreibung bezieht sich insbesondere auf die taktische Ebene, welche eine Attraktivität und Realisierbarkeit eines Spurwechselmanövers beschreibt. Üblicherweise wird ein autonomer Spurwechsel auf dieser Ebene nur unter Einbeziehung von Objektinformationen analysiert, welche der eigenen, gemäß dem vorliegenden Ausführungsbeispiel in Figur 1 der linken Fahrspur F1 und einer Zielspur ZS, das heißt der mittleren Fahrspur F2, zugeordnet werden. Objektinformationen weiterer Fahrzeuge PE1 bis PE3, die in folgenden Figuren gezeigt sind, auf einer übernächsten, also der rechten Fahrspur F3, werden jedoch nicht oder nur indirekt, beispielsweise über Potentialfelder berücksichtigt, wenn ein prädiziertes Verhalten keine Relevanz für die Zielspur ZS hat. Eine Anzahl der weiteren Fahrzeuge PE1 bis PE3 ist nicht auf 3 festgelegt und kann variieren. Fehlerhafte Prädiktionen oder Spurwechsel, die aus einem Kontext nicht ersichtlich sind, werden somit nicht oder nur durch generische Rückfalltrajektorien berücksichtigt. Bei Spurwechselmanövern auf drei- oder mehrspurigen Fahrbahnabschnitten F, insbesondere auf einer Autobahn, von einer linken Fahrspur F1 oder einer rechten Fahrspur F3 auf die mittlere Fahrspur F2 kann es jedoch dazu kommen, dass sich ein weiteres Fahrzeug PE1 bis PE3 im gleichen Zeitraum, auch ohne erkennbare Intention, dazu entscheidet auf dieselbe Zielspur ZS zu wechseln. Ein solcher Fall stellt eine vergleichsweise kritische Situation dar.

Bei Spurwechselmanövern besteht also ein Risiko einer Kollision mit weiteren Fahrzeugen PE1 bis PE3, die im gleichen Zeitraum auf die mittlere Fahrspur F2 wechseln könnten.

Während ein menschlicher Fahrer des Fahrzeuges EGO auf Basis seiner bisherigen Erfahrungen ein Verhalten eines umliegenden Verkehrs bei Spurwechselmanövern, auch unter Berücksichtigung von Objekten, also Verkehrsteilnehmern, auf einer übernächsten, in Bezug auf Figur 1 auf der rechten Fahrspur F3 einschätzen kann, um daraufhin seine taktische Fahrentscheidung in Bezug auf Attraktivität und Realisierbarkeit zu bewerten, sind automatisierte Fahrzeugsysteme auf Regelsätze angewiesen, die auf Basis von Messdaten einer Umgebungssensorik ein geplantes taktisches Verhalten bewerten.

Insbesondere existieren dabei weder eine Risikoquantifizierung, insbesondere in Form eines Sicherheitsmaßes S1, S2, noch eine Berechnungsvorschrift für ein gewünschtes Sollverhalten des automatisierten Fahrsystems des Fahrzeuges EGO.

Um ein Spurwechselmanöver auf die mittlere Fahrspur F2 unter Betrachtung von Objektinformationen auf einer übernächsten, das heißt der rechten Fahrspur F3 auf taktischer Ebene zu bewerten, bedarf es daher einer Festlegung von Messgrößen und Parametern, welche eine Quantifizierung eines Kollisionsrisikos dieser Objekte bei Spurwechselmanövern erlauben. Darauf basierend lässt sich anschließend ein gewünschtes Sollverhalten für das automatisierte Fahrsystem ableiten.

Im Folgenden wird ein Verfahren zur Sicherheitsbewertung eines Spurwechselmanövers im autonomen Fahrbetrieb des Fahrzeuges EGO mit einer Umgebungssensorik beschrieben, wobei anhand erfasster Signale der Umgebungssensorik eine Umgebung des Fahrzeuges EGO und sich in dieser befindende Objekte detektiert werden.

Zur Durchführung des Verfahrens wird angenommen, dass Spurwechselmanöver weiterer Fahrzeuge PE1 bis PE3 nicht vorhergesagt werden können.

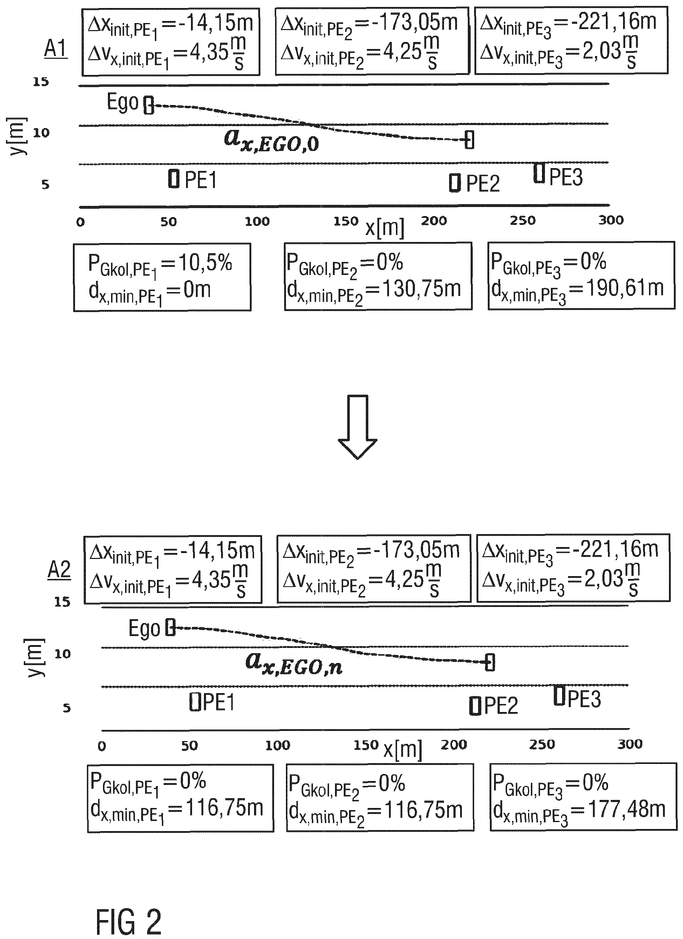

In Figur 2 sind zwei Abbildungen A1, A2 mit einem Fahrbahnabschnitt F und derselben Ausgangssituation $\Delta x_{MM,init,PE_i}$, $\Delta v_{x,init,PE_i}$ gezeigt, wobei das Fahrzeug EGO auf der linken Fahrspur F1 fährt und beabsichtigt ein Spurwechselmanöver auf die mittlere Fahrspur F2 durchzuführen. Auf der rechen Fahrspur F3 fahren drei weitere Fahrzeuge PE1 bis PE3.

Ein Spurwechselmanöver des Fahrzeuges EGO auf die mittlere Fahrspur F2 wird mittels hypothetischer Spurwechselmanöver der weiteren Fahrzeuge PE1 bis PE3 in Bezug auf eine Kollision geprüft, wobei es sich bei den weiteren Fahrzeugen PE1 bis PE3 um Personenkraftwagen oder auch um Lastkraftwagen handeln kann. Das heißt, dass jedes der weiteren Fahrzeuge PE1 bis PE3 einen potentiellen Einscherer für das Fahrzeug EGO darstellt. Auch kann es sich bei den weiteren Fahrzeugen PE1 bis PE3 um andere Verkehrsmittel, wie beispielsweise Motorräder, handeln, wobei auch hier Beschleunigungsbereiche ermittelt und dasselbe Prinzip zur Risikoanalyse in Bezug auf einen Spurwechsel des Fahrzeuges EGO angewendet wird.

Zur Überprüfung des Spurwechselmanövers anhand der hypothetischen Spurwechselmanöver der weiteren Fahrzeuge PE1 bis PE3 werden durch linearisierte Querprofile, insbesondere auf Basis einer maximalen Spurwechseldauer und eines Einschermomentes, Längsbeschleunigungen $a_{x,PE}$ berechnet, welche zu einer Kollision aufgrund einer Überlappung von Fahrzeugflächen zwischen dem Fahrzeug EGO und einem der weiteren Fahrzeuge PE1 bis PE3 führen. Hierzu wird definiert, dass eine Auftrittswahrscheinlichkeit der jeweiligen Längsbeschleunigungen $a_{x,PE}$, die zu einer Kollision führen, gleichzeitig eine Kollisionswahrscheinlichkeit $P_{Kollision}$ beschreibt beziehungsweise der Kollisionswahrscheinlichkeit $P_{Kollision}$ entspricht, da die Längsbeschleunigung $a_{x,PE}$ im direkten Zusammenhang mit einer Überlappung der Fahrzeugflächen und damit einer Kollision steht.

Eine Bewertung des Spurwechselmanövers auf taktischer Ebene erfolgt in Abhängigkeit einer relativen Längsposition $\Delta x_{MM,init,PE_i}$, auch als initialer Abstand zwischen Fahrzeugmittelpunkten, bezeichnet, als Fahrzeugmessgröße 1 und einer initialen relativen Längsgeschwindigkeit $\Delta v_{x,init,PE_i}$ als Fahrzeugmessgröße 2 bei Beginn des Spurwechselmanövers anhand von zwei Sicherheitsmaßen S1, S2.

Dabei ergibt sich die relative Längsposition $\Delta x_{MM,init,PE_i}$ wie folgt:

$$\Delta x_{MM,init,PE_i} = x_{M,EGO,init} - x_{M,PE_i,init} \tag{1}$$

Die initiale relative Längsgeschwindigkeit $\Delta v_{x,init,PE_i}$ wird wie folgt berechnet:

$$\Delta v_{x,init,PE_i} = v_{x,EGO,init} - v_{x,PE_i,init} \tag{2}$$

Insbesondere ist ein initialer Längsabstand negativ, wenn das Fahrzeug EGO hinter einem weiteren Fahrzeug PE1 bis PE3 fährt. Ähnlich verhält es sich bei einer Relativgeschwindigkeit $\Delta v_{x(tSP)}$, welche positiv ist, wenn das Fahrzeug EGO eine höhere Längsgeschwindigkeit $v_{x,EGO,init}$ aufweist, als ein weiteres Fahrzeug PE1 bis PE3.

Ein Sicherheitsmaß S1 bildet die Kollisionswahrscheinlichkeit $P_{Kollision}$ und ein weiteres Sicherheitsmaß S2 stellt, sofern keine Kollision droht, einen minimalen Abstand $d_{x,min}$ zwischen dem Fahrzeug EGO und den weiteren Fahrzeug PE1 bis PE3 dar.

Eine Bewertung der Kollisionswahrscheinlichkeit $P_{Kollision}$ als Sicherheitsmaß S1 erfolgt anhand einer Kollisionswahrscheinlichkeit $P_{Kollision}$, welche sich aus einer zuvor ermittelten Wahrscheinlichkeit erwartbarer Längsbeschleunigungen $a_{x,PE}$ der weiteren Fahrzeuge PE1 bis PE3, anhand der Ausgangssituation $\Delta x_{MM,init,PE_i}$, $\Delta v_{x,init,PE_i}$, anhand einer geometrischen Fahrzeuginformation $I_{EGO}$ des Fahrzeuges EGO, einer geometrischen Fahrzeuginformation $I_{PE}$ der weiteren Fahrzeuge PE1 bis PE3, anhand von den Spurwechselstartzeitpunkten der weiteren Fahrzeuge PE1 bis PE3, einer Zeitdauer des Spurwechselmanövers und einer geplanten Längsbeschleunigung $a_{x,EGO,n}$ des Fahrzeuges EGO ergibt.

Eine Bewertung des minimalen Abstandes $d_{x,min}$ als weiteres Sicherheitsmaß S2 erfolgt anhand eines minimalen Längsabstandes von sich am nächsten zueinander befindender Stoßstangen. Dabei wird der minimale Abstand $d_{x,min}$ während des gesamten Spurwechselmanövers gewählt, nachdem sich Querkoordinaten zwischen dem Fahrzeug EGO und zumindest einem weiteren Fahrzeug PE1 bis PE3 schneiden.

Eine Berechnung der beiden Sicherheitsmaße S1, S2 erfolgt modellbasiert.

Durch eine Veränderung der Längsbeschleunigung $a_{x,EGO,n}$, dargestellt mittels des Index n, und/oder einer Spurwechseldauer kann das Fahrzeug EGO die Kollisionswahrscheinlichkeit $P_{Kollision}$ und den minimalen Abstand $d_{x,min}$ während des Spurwechselmanövers beeinflussen.

In einer ersten Abbildung A1 ist ein Szenario mit drei weiteren Fahrzeugen PE1 bis PE3 als potentielle Einscherer auf die mittlere Fahrspur F2 in ihrer jeweiligen Ausgangssituation $\Delta x_{MM,init,PE_i}$, $\Delta v_{x,init,PE_i}$ gezeigt.

Eine Gesamtkollisionswahrscheinlichkeit $P_{GKol,PE_i,n} > 0$ des Fahrzeuges EGO besteht für das Fahrzeug EGO mit einem weiteren ersten Fahrzeug PE1, wobei in der ersten Abbildung A1 ein minimaler Abstand $d_{x,min}$ zu dem jeweiligen weiteren Fahrzeug PE1 bis PE3 bei einer Längsbeschleunigung $a_{,x,EGO,0}$ gilt, welcher bei einer Gesamtkollisionswahrscheinlichkeit $P_{GKol,PE_in} > 0$ zu Null gesetzt wird.

In einer zweiten Abbildung A2 in Figur 2 ist dieselbe Ausgangssituation $\Delta x_{MM,init,PE_i}$, $\Delta v_{x,init,PE_i}$ wie in der ersten Abbildung A1 dargestellt. Dabei weist das Fahrzeug EGO eine veränderte Längsbeschleunigung $a_{x,EGO,n}$ auf, so dass daraus neue Werte für die jeweilige Kollisionswahrscheinlichkeit $P_{Kollision}$ und den jeweiligen minimalen Abstand $d_{x,min}$ resultieren.

Das Fahrzeug EGO ist also in der Lage, ein Kollisionsrisiko bereits vor dem eingeleiteten Spurwechselmanöver zu verringern oder einen Beginn des Spurwechselmanövers bewusst zu verschieben, sofern ein positiver oder negativer Beschleunigungsaufwand des Fahrzeuges EGO zu hoch ist und/oder bis sich die Ausgangslage für einen sicheren Spurwechsel verbessert hat.

Zur Durchführung des Verfahrens ist eine Definition für einen Startzeitpunkt und einen Endzeitpunkt des Spurwechselmanövers erforderlich, um ein jeweils vorliegendes Szenario von weiteren Szenarien abzugrenzen. Diese Zeitpunkte werden nach dem Verfahren, bekannt aus Quelle:

Vasile, Laurin, Kiran Divakar, and Dieter Schramm. Deep-Learning Basierte Verhaltensprädiktion Rückwärtiger Verkehrsteilnehmer Für Hochautomatisierte Spurwechsel. Transforming Mobility - What Next?- Tagungsband zum 13.
Wissenschaftsforum Mobilität: Springer Fachmedien Wiesbaden, 2021. ermittelt.

Mittels eines definierten Start- und Endzeitpunktes eines Spurwechselmanövers werden gemittelte Längsbeschleunigungen auf Basis der erfassten Messdaten in Abhängigkeit von einer Spurwechselrichtung, insbesondere in Bezug auf eine schnellere/langsamere Fahrspur F1 bis F3, und einer Fahrzeugklasse, aus einem Realfahrdatensatz ermittelt, mit denen Spurwechselmanöver durchgeführt werden. Darüber hinaus wird auch die Wahrscheinlichkeit einer gemittelten Längsbeschleunigung, mit welcher das Spurwechselmanöver durchgeführt wird, ermittelt. Dabei wird über eine Häufigkeitsverteilung in Abhängigkeit der Spurwechselrichtung und Fahrzeugklasse jeweils eine Wahrscheinlichkeitsdichtefunktion *pdf* erstellt, deren Integral die Wahrscheinlichkeit eines entsprechenden Beschleunigungsbereiches beschreibt. Die Wahrscheinlichkeitsdichtefunktion *pdf* wird anschließend auf die weiteren Fahrzeuge PE1 bis PE3 in Abhängigkeit der Spurwechselrichtung und ihrer Fahrzeugklasse angewandt.

Auf Basis der Messdaten wird mittels des Start- und Endzeitpunktes weiterhin eine Spurwechseldauer $t_{PE}(\Delta y_{ZM})$ in Abhängigkeit eines Abstandes $\Delta y_{T,ZM}$ eines Fahrzeuges PE1 bis PE3 zu einer Zielspurmitte ZM, von einer Spurwechselrichtung, insbesondere in Bezug auf eine schnellere/langsamere Fahrspur F1 bis F3, und einer Fahrzeugklasse bestimmt. Die Spurwechseldauer $t_{PE}(\Delta y_{ZM})$ wird über mehrere Spurwechselmanöver, die einen ähnlichen Abstand $\Delta y_{PE,ZM}$ zur Zielspurmitte ZM aufweisen, durch Mittelwertbildung bestimmt.

Mittels der ermittelten Längsbeschleunigung wird ein Modell entwickelt, mittels dessen die Kollisionswahrscheinlichkeit $P_{Kollision}$ als Sicherheitsmaß S1 und der minimale Abstand $d_{x,min}$ zwischen dem Fahrzeug EGO und den weiteren Fahrzeugen PE1 bis PE3 als weiteres Sicherheitsmaß S2 auf Basis einer jeweiligen Ausgangssituation $\Delta x_{MM,init,PE_i}$, $\Delta v_{x,init,PE_i}$ ermittelt werden kann, insbesondere berechnet werden kann, und welches Einflussmöglichkeiten des Fahrzeuges EGO durch Veränderung seiner Längsbeschleunigung $a_{x,EGO,n}$ berücksichtigt.

Längsbeschleunigungsbereiche und deren Wahrscheinlichkeit werden zur Berechnung der Kollisionswahrscheinlichkeit $P_{Kollision}$ als Sicherheitsmaß S1 verwendet. Dabei wird geprüft, welche Längsbeschleunigungen $a_{x,PE}$ des jeweiligen weiteren Fahrzeuges PE1 bis PE3 zu einer Kollision mit dem Fahrzeug EGO während eines Spurwechselmanövers auf die mittlere Fahrspur F2 führen.

Spurwechselmanöver des Fahrzeuges EGO werden auf Basis der Ausgangssituation $\Delta x_{MM,init,PE_i}$, $\Delta v_{x,init,PE_i}$ zu einem oder mehreren weiteren Fahrzeugen PE1 bis PE3 auf der rechten Fahrspur F3 bewertet. Diese Bewertung wird über einen initialen Abstand $\Delta x_{MM,init,PE_i}$ der beiden Fahrzeugmittelpunkte und eine initiale relative Längsgeschwindigkeit $\Delta v_{x,init,PE_i}$ beschrieben. Diese beiden Parameter werden anhand erfasster Signale der Umgebungssensorik des automatisiert, insbesondere autonom, fahrenden Fahrzeuges EGO erfasst.

Anhand der Ausgangssituation $\Delta x_{MM,init,PE_i}$, $\Delta v_{x,init,PE_i}$ wird anschließend eine minimale Längsbeschleunigung $a_{x,PE,min}$ und eine maximale Längsbeschleunigung $a_{x,PE,max}$ der weiteren Fahrzeuge PE1 bis PE3 ermittelt, für welche bei einem linearisierten Querprofil des Fahrzeuges EGO und der weiteren Fahrzeuge PE1 bis PE3 gerade noch eine Kollision bei einem Spurwechselmanöver eintritt. Werte innerhalb dieser Längsbeschleunigungsgrenzen, einschließlich der Grenzwerte, führen ebenfalls zu einer Kollision.

Ein notwendiger Längsbeschleunigungsbereich $a_{x,PE,min}$ bis $a_{x,PE,max}$ des weiteren Fahrzeuges PE1 bis PE3, der zu einer potentiellen Kollision führt, kann durch die Längsbeschleunigung $a_{x,EGO}$ beeinflusst werden, wobei unterschiedliche Längsbeschleunigungen $a_{x,EGO,n}$ mittels des Indizes n dargestellt werden.

Ein zu betrachtender Zeitraum ist durch ein Maximum der Spurwechseldauer $t_{Ego}$ des Fahrzeuges EGO und der weiteren Fahrzeuge PE1 bis PE3 $t_{max} = max(t_{PE}(\Delta y_{ZM}), t_{Ego})$ definiert.

Insbesondere erfolgt dies deshalb, da eine längere Spurwechseldauer mehr Zeit bietet, um auch eine höhere initiale relative Längsgeschwindigkeit $\Delta v_{x,init,PE_i}$ und Distanzen mit einer niedrigeren Beschleunigungsdifferenz zwischen dem Fahrzeug EGO und zumindest einem der weiteren Fahrzeuge PE1 bis PE3 abzubauen, wobei dies einen kritischeren Fall darstellt. Ein solcher Fall wird weiter unten beschrieben. Darüber hinaus ist ein Beginn des zu betrachtenden Zeitraumes, innerhalb dessen eine Kollision eintreten kann, durch einen Zeitpunkt $t_{EM}$ eines Einschervorganges definiert.

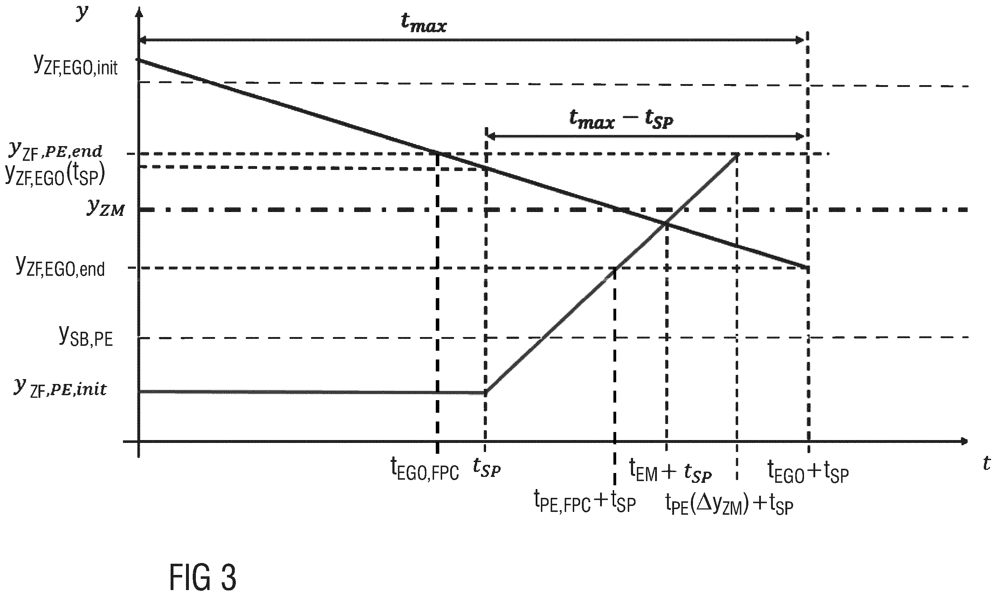

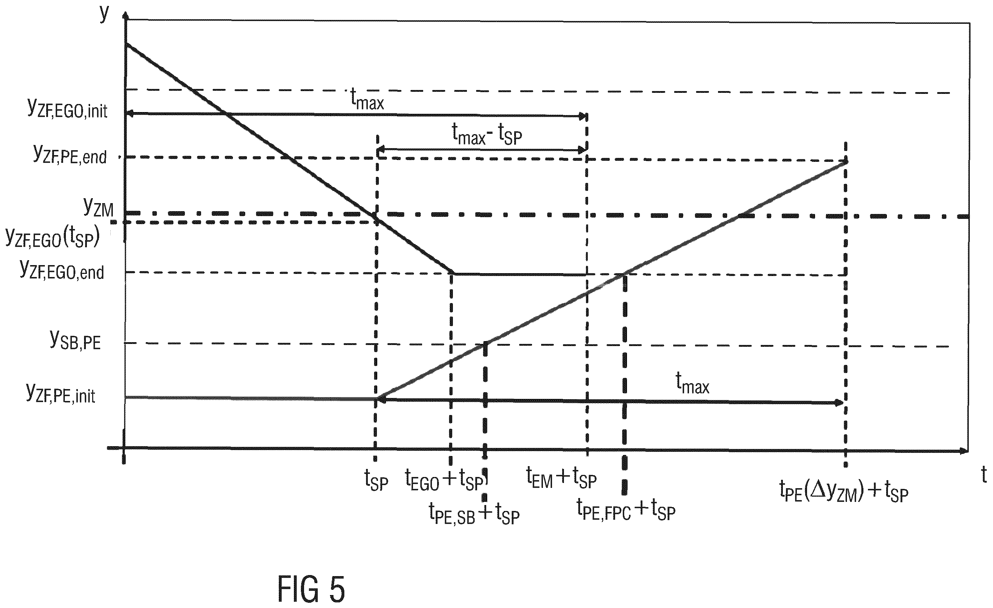

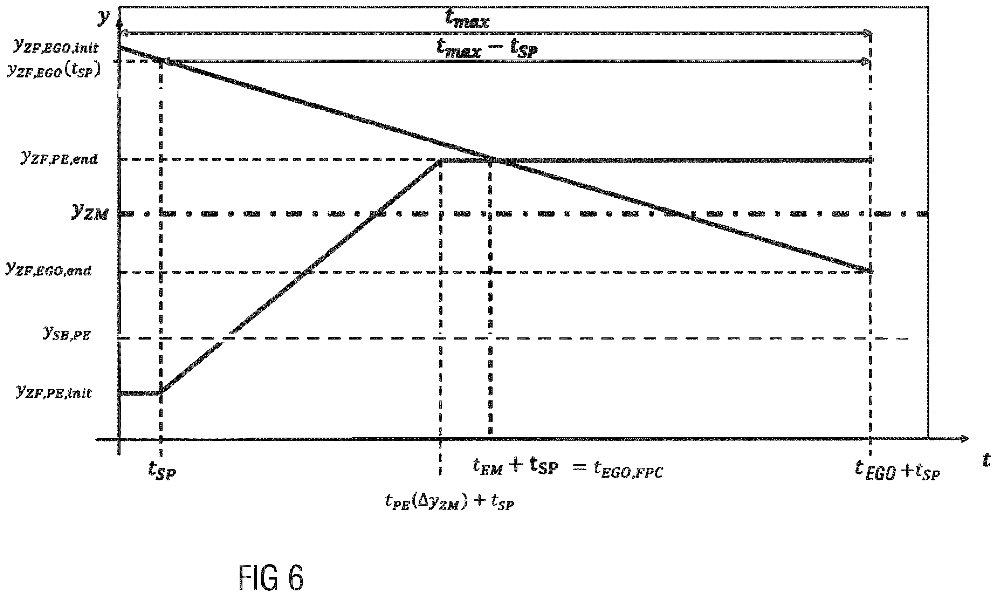

Um den Zeitpunkt $t_{EM}$ des Einschervorganges beider Fahrzeuge EGO, PE1 bis PE3, also der Zeitpunkt, zu welchem sich die beiden Fahrzeugflächen das erste Mal lateral überschneiden, zu bestimmen, werden Querbewegungen des Fahrzeuges EGO und des entsprechenden weiteren Fahrzeuges PE1 bis PE3 linearisiert. Die Figuren 3 bis 6 veranschaulichen jeweils eine Berechnungsvorschrift und zeigen vier mögliche Fälle.

Unter Annahme einer konstanten Quergeschwindigkeit lassen sich anhand des initialen Abstandes $\Delta y_{PE, ZM}$ zur Zielspurmitte ZM vier mögliche Zeitpunkte $t_{EM}$ für einen Einschervorgang berechnen.

Fall 1:

Ein in Figur 3 gezeigtes Ausführungsbeispiel zeigt mögliche Schnittpunkte resultierender Geraden, welche die linearisierte Querbewegung der fahrzeugzugewandten Fahrzeugseiten (ZF) darstellen.

Überschneiden sich die beiden Fahrzeugflächen vor Beendigung einer der beiden Spurwechselmanöver, so gilt:

$$t_{EM} = \frac{|y_{ZF,Ego}(t_{SP}) - y_{ZF,PE,init}|}{|v_{y,Ego} + v_{y,PE}|} \tag{3}$$

Bedingung:

$$\left( t_{EGO} = \frac{|y_{ZF,Ego,End} - y_{ZF,Ego}(t_{SP})|}{|v_{y,Ego}|} \geq t_{PE,FPC} = \frac{|y_{ZF,Ego,End} - y_{ZF,PE,init}|}{|v_{y,PE}|} \right) \bigwedge$$

$$\left( t_{PE}(\Delta y_{ZM}) = \frac{|y_{ZF,PE,End} - y_{ZF,PE,init}|}{|v_{y,PE}|} + t_{SP} > t_{EGO,FPC} = \frac{y_{ZF,Ego,init} - y_{ZF,PE,End}}{|v_{y,EGO}|} \right) \tag{4}$$

$t_{SP}$ beschreibt dabei eine Verschiebung des Spurwechselbeginnes des entsprechenden weiteren Fahrzeuges PE1 bis PE3. Durch eine Annahme, dass es Spurwechselmanöver gibt, welche nicht im Kontext erkannt werden können, kann sich das entsprechende weitere Fahrzeug PE1 bis PE3 in jedem möglichen Zeitpunkt des Spurwechselmanövers des Fahrzeuges EGO dazu entscheiden, ebenfalls in die Fahrspur F1 bis F3 zu wechseln.

Durch die Verschiebung $t_{SP}$ des Spurwechselbeginnes des entsprechenden weiteren Fahrzeuges PE1 bis PE3 auf einen späteren Zeitpunkt verkürzt sich der zu betrachtende Zeitraum.

Eine Ausgangsposition und -relativgeschwindigkeit berechnet sich, wie folgt:

$$\Delta x_{MM}(t_{SP}) = \Delta x_{MM,init,PE_i} + \Delta v_{x,init,PE_i} t_{SP} + \frac{1}{2}(a_{x,Ego,n} - a_{x,PE_i,init}) t_{SP}^2 \qquad (5)$$

$$\Delta v_x(t_{SP}) = \Delta v_{x,init,PE_i} + (a_{,Ego,n} - a_{x,PE_i,init}) t_{SP} \qquad (6)$$

Es wird angenommen, dass die initiale Längsbeschleunigung $a_{x,PE_i,init}$ von weiteren Fahrzeugen PE1 bis PE3 nicht exakt oder nur ungenau gemessen werden kann und wird für das hier beschriebene Verfahren mit Null angenommen.

$$y_{ZF,EGO}(t_{SP}) = y_{ZF,EGO,init} + v_{y,EGO} t_{SP} \qquad (7)$$

$$t_{SP} \in [0, t_{max} - \frac{|y_{SB,PE} - y_{ZF,PE,init}|}{|v_{y,PE}|}] \qquad (8)$$

Ein erster möglicher Kontakt zwischen dem Fahrzeug EGO und dem entsprechenden weiteren Fahrzeug PE1 bis PE3 ist in Figur 3 ebenfalls bezeichnet dargestellt.

Fall 2:

Erreicht das entsprechende weitere Fahrzeug PE1 bis PE3 eine laterale Endposition des Fahrzeuges EGO, nachdem das Fahrzeug EGO seine Querbewegung beendet hat, aber noch vor einem Ende des betrachteten Zeitraumes ($t_{max}$ - $t_{SP}$), so gilt:

$$t_{EM} = \frac{|y_{ZF,Ego,End} - y_{ZF,PE,init}|}{|v_{y,PE}|} \qquad (9)$$

Bedingung:

$$\begin{aligned}&\left(t_{PE}(\Delta y_{ZM}) > t_{Ego}\right) \wedge \\ &\left(t_{max} - t_{SP} \geq t_{PE,FPC} = \frac{|y_{ZF,Ego,End} - y_{ZF,PE,init}|}{|v_{y,PE}|} \geq t_{EGO} = \frac{|y_{ZF,Ego,End} - y_{ZF,Ego}(t_{SP})|}{|v_{y,Ego}|}\right)\end{aligned} \qquad (10)$$

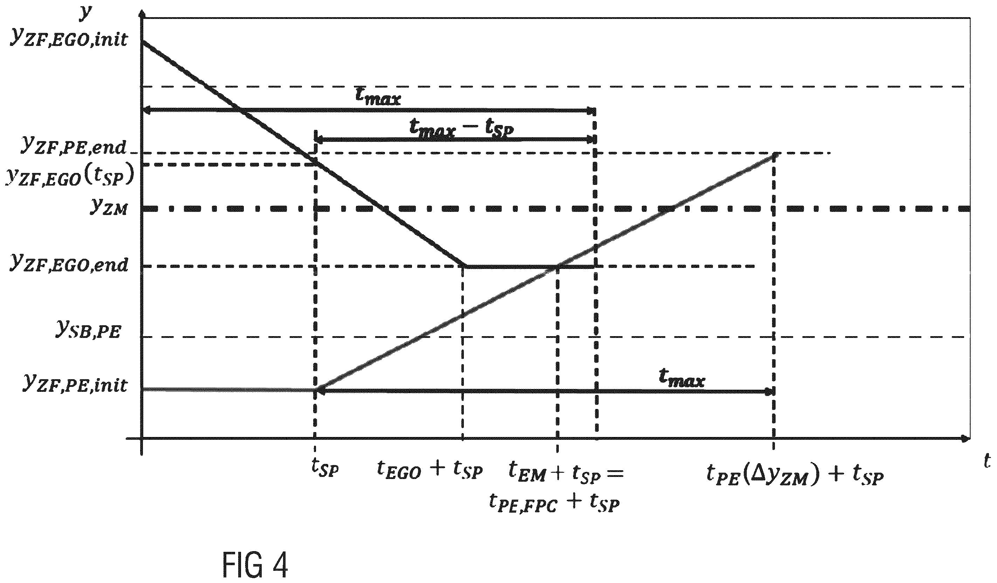

wie in dem Ausführungsbeispiel in Figur 4 gezeigt ist.

Fall 3:

Erreicht das entsprechende weitere Fahrzeug PE1 bis PE3 die laterale Endposition erst nach einem Ende des betrachteten Zeitraumes ($t_{max}$ - $t_{SP}$), aber erreicht innerhalb des betrachteten Zeitraumes ($t_{max}$ - $t_{SP}$) noch die Spurbegrenzung ($y_{SB,PE}$) der Zielspur ZS, so gilt:

$$t_{EM} = t_{max} - t_{SP} \qquad (11)$$

Bedingung:

$$t_{PE,FPC} = \frac{|y_{ZF,Ego,End} - y_{ZF,PE,init}|}{|v_{y,PE}|} > t_{max} - t_{SP} \geq t_{PE,SB} = \frac{|y_{SB,PE} - y_{ZF,PE,init}|}{|v_{y,PE}|}.$$

Obwohl es zu keiner tatsächlichen Überlappung zwischen Fahrzeugflächen kommt, wird ein Aufenthalt beider Fahrzeug EGO, PE1 bis PE3 nebeneinander in derselben Fahrspur F2 als kritisch betrachtet und folglich als Überlappung gewertet.

Fall 4:

Erreicht das entsprechende weitere Fahrzeug PE1 bis PE3 seine laterale

Endposition $y_{ZF,PE,end}$ bevor das Fahrzeug EGO eine laterale Endposition $y_{ZF,EGO,end}$ des entsprechenden weiteren Fahrzeuges PE1 bis PE3 erreicht, so gilt:

$$t_{EM} = \frac{|y_{ZF,Ego}(t_{SP}) - y_{ZF,PE,End}|}{|v_{y,Ego}|} \tag{12}$$

Bedingung:

$$t_{EGO,FPC} - t_{SP} = \frac{|y_{ZF,Ego,init} - y_{ZF,PE,End}|}{|v_{y,EGO}|} - t_{SP} \geq t_{PE}(\Delta y_{ZM}) = \frac{|y_{ZF,PE,End} - y_{ZF,PE,init}|}{|v_{y,PE}|} \tag{13}$$

Mit Gleichung (13) ist Fall 4 abgeschlossen.

Über eine folgende Berechnungsvorschrift werden eine minimale Längsbeschleunigung $a_{x,PE_i,min}$ und eine maximale Längsbeschleunigung $a_{x,PE_i,max}$ des entsprechenden weiteren Fahrzeuges PE1 bis PE3 ermittelt. Werte innerhalb dieser Grenzen, Grenzwerte eingeschlossen, führen bei gegebener Ausgangssituation $\Delta x_{MM,init,PE_i}$, $\Delta v_{x,init,PE_i}$ zu einer Kollision:

*Beschleunigungsdifferenzgrenzfälle:*

$$\Delta a_{Gf,t_{max}} = -\frac{\Delta v_x(t_{SP})}{t_{max} - t_{SP}}; \ \Delta a_{Grenzfall,t_{EM}} = -\frac{\Delta v_x(t_{SP})}{t_{EM}} \tag{14}$$

*Startpositiongrenzfälle (Gf):*

$$\Delta x_{MM,Gf,t_{max}} = \begin{cases} \frac{1}{2}\Delta a_{Gf,t_{max}}(t_{max} - t_{SP})^2 - L & f\ddot{u}r \ \Delta v_x(t_{SP}) \geq 0 \\ \frac{1}{2}\Delta a_{Gf,t_{max}}(t_{max} - t_{SP})^2 + L & f\ddot{u}r \ \Delta v_x(t_{SP}) < 0 \end{cases}; \tag{15}$$

$$\Delta x_{MM,Gf,t_{EM}} = \begin{cases} \frac{1}{2}\Delta a_{Gf,t_{max}}t_{EM}^2 - L & f\ddot{u}r \ \Delta v_x(t_{SP}) \geq 0 \\ \frac{1}{2}\Delta a_{Gf,t_{max}}t_{EM}^2 + L & f\ddot{u}r \ \Delta v_x(t_{SP}) < 0 \end{cases} \tag{16}$$

$$\Delta x_{MM,a_{min,equal}} = -\Delta v_x(t_{SP})\frac{t_{EM}}{1 + \frac{t_{EM}}{t_{max} - t_{SP}}} + L \quad f\ddot{u}r \ \Delta v_x(t_{SP}) \geq 0; \tag{17}$$

$$\Delta x_{MM,a_{max,equal}} = -\Delta v_x(t_{SP})\frac{t_{EM}}{1 + \frac{t_{EM}}{t_{max} - t_{SP}}} - L \quad f\ddot{u}r \ \Delta v_x(t_{SP}) < 0 \tag{18}$$

mit:

$$L = \frac{l_{EGO} + l_{PE_i}}{2}; \ l_{EGO} = Fahrzeugl\ddot{a}nge \ EGO, \ l_{PE_i} = Fahrzeugl\ddot{a}nge \ PE1 \ bis \ PE3$$

$$\Delta x_{MM,t_{max}} = \Delta x_{MM}(t_{SP}) + \Delta v_x(t_{SP})(t_{max} - t_{SP}) + \frac{1}{2}a_{x,Ego,n}(t_{max} - t_{SP})^2; \tag{19}$$

$$\Delta x_{MM,t_{EM}} = \Delta x_{MM}(t_{SP}) + \Delta v_x(t_{SP})t_{EM} + \frac{1}{2}a_{x,Ego,n}t_{EM}^2 \tag{20}$$

$$a_{x,PE_i,max} = \begin{cases} \dfrac{2(\Delta x_{MM,t_{max}}+L)}{(t_{max}-t_{SP})^2} & \begin{aligned} &f\ddot{u}r \left(\Delta x_{MM}(t_{SP}) < \Delta x_{MM,Gf,t_{max}} \land \Delta v_x(t_{SP}) \geq 0\right) \\ &\lor (\Delta x_{MM}(t_{SP}) \leq \Delta x_{MM,a_{max,equal}} \land \Delta v_x(t_{SP}) < 0) \end{aligned} & (21a) \\[2em] a_{x,Ego,n} - \dfrac{1}{2}\dfrac{\Delta v_x^2(t_{SP})}{\Delta x_{MM}(t_{SP})+L} & \begin{aligned} &f\ddot{u}r\ \Delta x_{MM,Gf,t_{max}} \leq \Delta x_{MM}(t_{SP}) \leq \Delta x_{MM,Gf,t_{EM}} \\ &\land \Delta v_x(t_{SP}) \geq 0 \end{aligned} & (21b) \\[2em] \dfrac{2(\Delta x_{MM,t_{EM}}+L)}{t_{EM}^2} & \begin{aligned} &f\ddot{u}r \left(\Delta x_{MM,Gf,t_{EM}} < \Delta x_{MM}(t_{SP}) \land \Delta v_x(t_{SP}) \geq 0\right) \\ &\lor (\Delta x_{MM,a_{max,equal}} < \Delta x_{MM}(t_{SP}) \land \Delta v_x(t_{SP}) < 0) \end{aligned} & (21c) \end{cases}$$

$$a_{x,PE_i,min} = \begin{cases} \dfrac{2(\Delta x_{MM,t_{max}}-L)}{(t_{max}-t_{SP})^2} & \begin{aligned} &f\ddot{u}r \left(\Delta x_{MM,Gf,t_{max}} \leq \Delta x_{MM}(t_{SP}) \land \Delta v_x(t_{SP}) < 0\right) \\ &\lor (\Delta x_{MM,a_{min,equal}} \leq \Delta x_{MM}(t_{SP}) \land \Delta v_x(t_{SP}) \geq 0) \end{aligned} & (22d) \\[2em] a_{x,Ego,n} - \dfrac{1}{2}\dfrac{\Delta v_x^2(t_{SP})}{\Delta x_{MM}(t_{SP})-L} & \begin{aligned} &f\ddot{u}r\ \Delta x_{MM,Gf,t_{EM}} \leq \Delta x_{MM}(t_{SP}) \leq \Delta x_{MM,Gf,t_{max}} \\ &\land \Delta v_x(t_{SP}) < 0 \end{aligned} & (22e) \\[2em] \dfrac{2(\Delta x_{MM,t_{EM}}-L)}{t_{EM}^2} & \begin{aligned} &f\ddot{u}r \left(\Delta x_{MM}(t_{SP}) < \Delta x_{MM,Gf,t_{EM}} \land \Delta v_x(t_{SP}) < 0\right) \\ &\lor (\Delta x_{MM}(t_{SP}) < \Delta x_{MM,a_{min,equal}} \land \Delta v_x(t_{SP}) \geq 0) \end{aligned} & (22f) \end{cases}$$

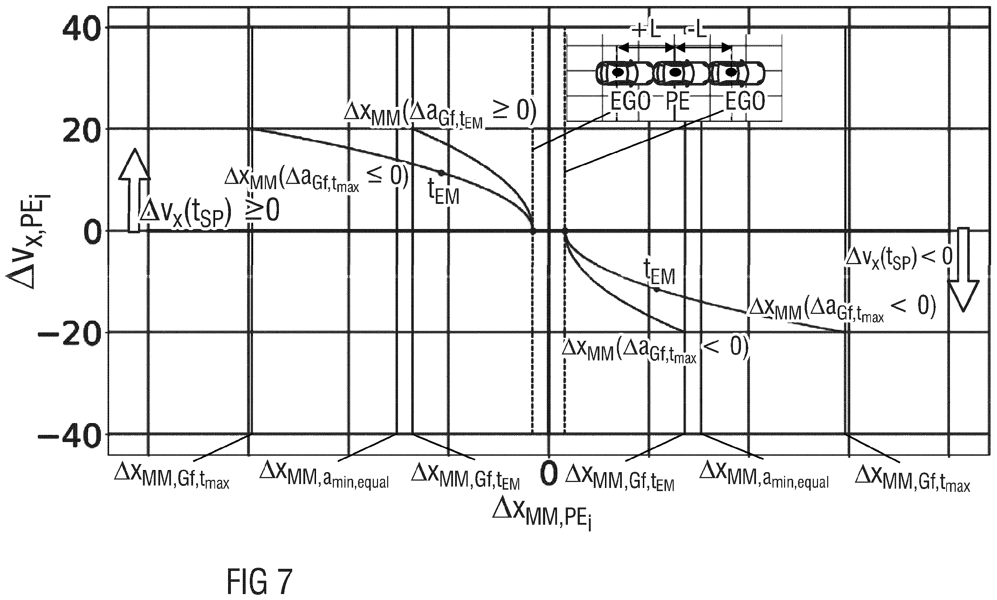

Figur 7 zeigt Erklärungen zur Berechnungsvorschrift.

Einen Beschleunigungsgrenzfall bildet eine Beschleunigungsdifferenz $\Delta a_{Gf,t_{max}/t_{EM}}$, mit welcher die Relativgeschwindigkeit $\Delta v_x(t_{SP})$ zum Zeitpunkt $t_{SP}$ zum Spurwechselende beziehungsweise zum Zeitpunkt $t_{EM}$ zum Einschervorgang vollständig abgebaut wird.

In Abhängigkeit von einem Vorzeichen der Relativgeschwindigkeit $\Delta v_x(t_{SP})$ zum Zeitpunkt $t_{SP}$ lässt sich der initiale Grenzfallabstand $\Delta x_{MM,Gf,t_{max}/t_{EM}}$ der Fahrzeugmittelpunkte berechnen, welcher notwendig wäre, damit bei gegebener Relativgeschwindigkeit $\Delta v_x(t_{SP})$ ein letzter Annäherungspunkt, bevor sich die Fahrzeuge EGO, PE1 bis PE3 wieder voneinander entfernen würden, eine Berührung der Stoßstangen ist.

Befindet sich der Abstand $\Delta x_{MM}(t_{SP})$ der Fahrzeugmittelpunkte zum Zeitpunkt $t_{SP}$ zwischen den in Gleichung (15) und (16) ermittelten Grenzen, so ist eine Differenzbeschleunigung gesucht, für welche sich die Stoßstangen der Fahrzeuge EGO, PE1 bis PE3 berühren ($\Delta x_{SS,t} = 0$), bevor sich die Fahrzeuge EGO, PE1 bis PE3 wieder voneinander entfernen. Dieser Fall ist dann gegeben, wenn:

$$\Delta x_{SS,t} = \Delta x_{MM,init}(t_{SP}) \pm L + \Delta v_x(t_{SP})t + \frac{1}{2}(a_{x,Ego,n} - a_{x,PE})t^2 \,;\ t \in t_{EM},\ (t_{max}-t_{SP}) \quad (23)$$

nach t aufgelöst nur eine Lösung ergibt. Dies ist der Fall, wenn die Quadratwurzel der Lösung für quadratische Gleichungen mit der Form $ax^2 + bx + c = 0$ Null ergibt. Die Berechnung für einen Zeitpunkt der Berührung der Stoßstangen $\Delta x_{SS,t}$ liegt dabei zwischen dem Zeitpunkt $t_{EM}$ des Einschervorganges und einem Ende des Spurwechselmanövers und wird für jede Verschiebung $t_{SP}$ des Startzeitpunktes berechnet.

In Abhängigkeit von einem Vorzeichen der Relativgeschwindigkeit $\Delta v_x(t_{SP})$ ändert sich die Anzahl möglicher Fälle bei Gleichung (21) und (22). Bei positiver Relativgeschwindigkeit $\Delta v_x(t_{SP})$ wird die maximale Längsbeschleunigung $a_{x,PE_i,max}$ durch Gleichung (21a), (21b) oder (21c) bestimmt, während die minimale Längsbeschleunigung $a_{x,PE_i,min}$ nur durch Gleichung (22d) oder (22f) bestimmt wird. Bei einer negativen Relativgeschwindigkeit $\Delta v_x(t_{SP})$ verhält es sich entsprechend umgekehrt, wobei die maximale Längsbeschleunigung $a_{x,PE_i,max}$ dann durch Gleichung (21a) oder (21c) bestimmt wird. Gleichung (17) für die Grenzfallposition für die minimale Längsbeschleunigung $a_{x,PE_i,min}$ bei positiver Relativgeschwindigkeit $\Delta v_x(t_{SP})$ erhält man durch Gleichsetzen der Gleichungen (22d) und (22f), beziehungsweise Gleichung (18) für die Grenzfallposition für die maximale Längsbeschleunigung $a_{x,PE_i,max}$ bei negativer Relativgeschwindigkeit $\Delta v_x(t_{SP})$ durch Gleichsetzen der Gleichungen (21a) und (21c).

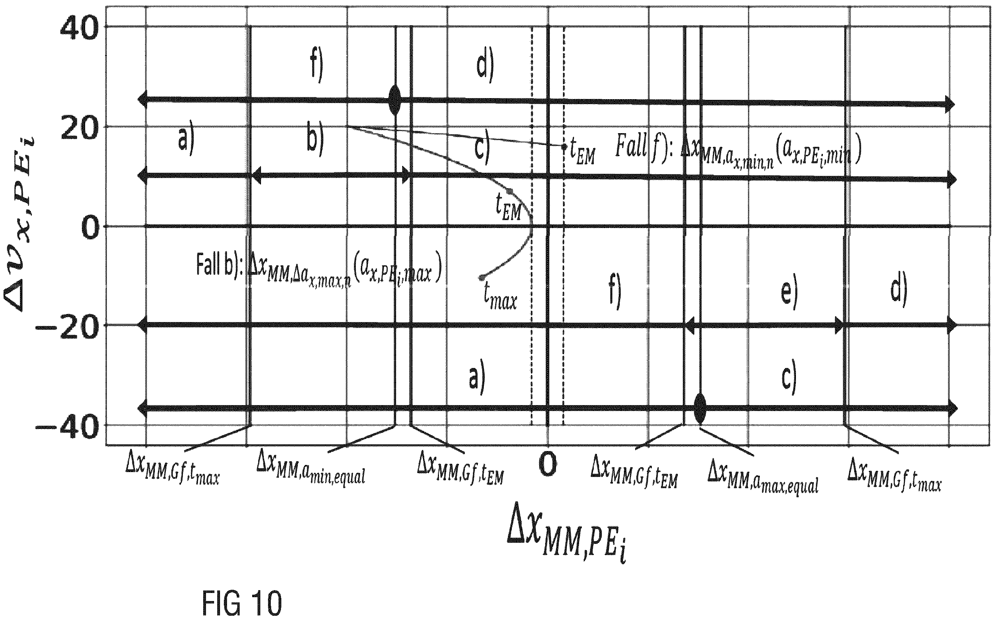

Figur 10 veranschaulicht die Grenzfallpositionen aus den Gleichungen (15) bis (18) und einzelnen Bereichen aus den Gleichungen (21a-c) und (22d-f).

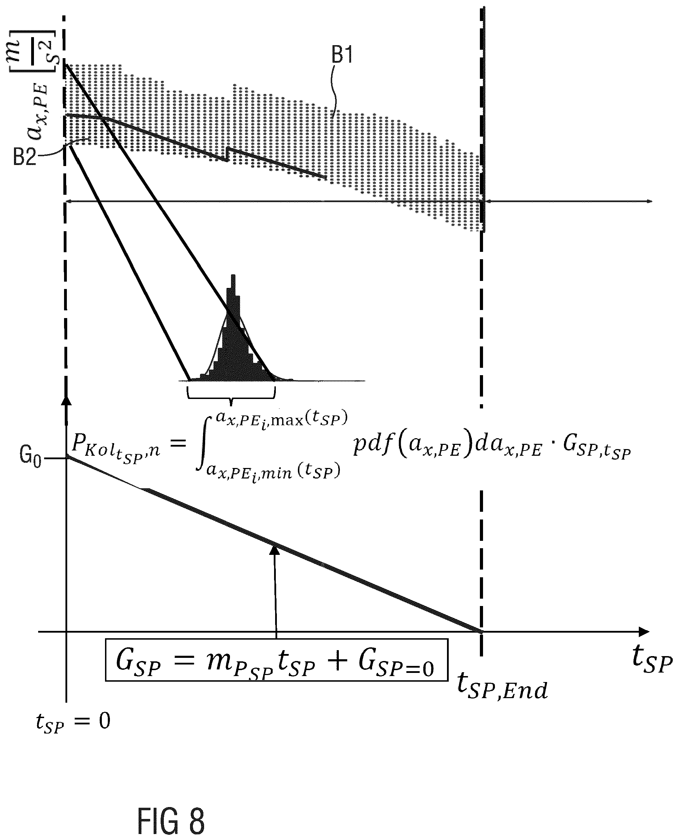

Ermittelte Längsbeschleunigungswerte $a_{x,PE,min}$ und $a_{x,PE,max}$ aus den Gleichungen (21a) bis (21c) und (22d) bis (22f) werden dann als Integralgrenzen, wie in Figur 8 gezeigt ist, bei der Berechnung der Kollisionswahrscheinlichkeit $P_{Kollision}$ als Sicherheitsmaß S1 verwendet. Hierzu wird die zu einem früheren Zeitpunkt ermittelte Wahrscheinlichkeitsdichtefunktion *pdf* integriert. Die Kollisionswahrscheinlichkeit $P_{Kollision}$ wird in Abhängigkeit von der Verschiebung $t_{SP}$

gewichtet, wobei die Gewichtung über eine in Figur 8 gezeigte Gerade $G_{SP,tSP}$ definiert ist. Insbesondere zeigt Figur 8 eine Herleitung der Kollisionswahrscheinlichkeit $P_{Kollision}$ als Sicherheitsmaß S1.

Begründung für die Gewichtungsgerade ist: Je später das Spurwechselmanöver für das entsprechende weitere Fahrzeug PE1 bis PE3 beginnt, desto weniger Zeit steht zur Verfügung, um das Spurwechselmanöver zu beenden, wodurch das Risiko einer Kollision sinkt. Weiterhin kann davon ausgegangen werden, dass mit einem Fortschreiten des Spurwechselmanövers des Fahrzeuges EGO auch die Wahrscheinlichkeit sinkt, dass ein Spurwechsel von weiteren Fahrzeugen PE1 bis PE3 begonnen wird, da die Wahrscheinlichkeit steigt mit der die Bewegung des Fahrzeuges EGO von weiteren Fahrzeugen PE1 bis PE3 wahrgenommen wird. Anschließend werden die gewichteten Einzelkollisionswahrscheinlichkeiten zu einer Gesamtkollisionswahrscheinlichkeit $P_{GKol,PE_i,n}$ summiert. Die Gesamtkollisionswahrscheinlichkeit $P_{GKol,PE_i,n}$ kann auch ohne Gewichtungsgerade berechnet und als Sicherheitsmaß S1 verwendet werden.

$$P_{GKol,PE_i,n} = \sum_{t_{SP}=0}^{t_{SP,End}} \int_{a_{x,PE_i,min}(t_{SP})}^{a_{x,PE_i,\max}(t_{SP})} pdf\big(a_{x,PE}\big) da_{x,PE} \cdot G_{SP,t_{SP}} \tag{24}$$

In einem oberen Bereich der Figur 8 sind zwei Bereiche B1, B2 unterschiedlich schraffiert gezeigt. Ein erster Bereich B1 stellt dabei mögliche Querkollisionen durch Überlappung von Fahrzeugflächen zwischen dem Fahrzeug EGO und einem entsprechenden weiteren Fahrzeug PE1 bis PE3 dar.

Ein unterer Bereich B2 stellt einen möglichen Eintritt von Längskollisionen zwischen dem Fahrzeug EGO und dem entsprechenden weiteren Fahrzeug PE1 bis PE3 dar.

Mittels der Geraden $G_{SP,tSP}$ ist unterhalb dieser eine Fläche $A_G = 1 = \frac{1}{2} G_0 t_{SP,End}$ ausgebildet. Zusätzlich wird ein Schnittpunkt mit der Abszisse mittels eines letzten relevanten Startzeitpunktes $t_{SP,End}$ für den Spurwechsel des entsprechenden weiteren Fahrzeuges PE1 bis PE3 festgelegt. Dieser letzte relevante Startzeitpunkt $t_{SP,End}$ stellt einen Zeitpunkt dar, zu welchem das entsprechende weitere Fahrzeug PE1 bis P3 sein Spurwechselmanöver beginnt und bei welchem eine Zeit ausreicht, die Spurbegrenzung SB der Zielspur ZS mit der dem Fahrzeug EGO zugewandten Fahrzeugfläche zu berühren.

Ein Schnittpunkt $G_0$ mit der Ordinatenachse ergibt sich aus einer Forderung für die Fläche $A_G = 1 = \frac{1}{2} G_0 t_{SP,End}$ unterhalb der Geraden $G_{SP,tSP}$ zu $G_0 = \frac{2}{t_{SP,End}}$. Eine Steigung $m_{GSP}$ der Geraden $G_{SP,tSP}$ wird wie folgt ermittelt:

$$m_{G_{SP}} = -\frac{G_0}{t_{SP,End}}. \tag{25}$$

Die Gesamtkollisionswahrscheinlichkeit aller PEs wird anschließend summiert ($AGKol$ = akkumulierte GKol, $n_{PE}$ = Anzahl potentieller Einscherer).

$$P_{AGKol,PE,n} = \sum_{i=1}^{n_{PE}} P_{GKol,PE_i,n} \tag{26}$$

Die Gesamtkollisionswahrscheinlichkeit $P_{AGKol,PE,n}$ kann in jede beliebige Kostenfunktion einer Trajektorienplanung integriert werden, um die optimale Längsbeschleunigung $a_{x,EGO}$ unter verschiedensten Anforderungen und/oder Einschränkungen in Bezug auf eine Motorisierung, einen Haftreibwert, Komfortanforderungen, Gesetzesvorgaben etc. zu berechnen. Sollte sich der berechnete Beschleunigungsaufwand des Fahrzeuges EGO, der notwendig wäre, um eine potentielle Kollision auszuschließen, als nachteilig zu stark auf andere Anforderungen auswirken, so ist es auch möglich das Spurwechselmanöver erst zu einem späteren Zeitpunkt durchzuführen, wenn sich die Ausgangslage zur Durchführung eines sicheren Spurwechselmanövers geändert hat.

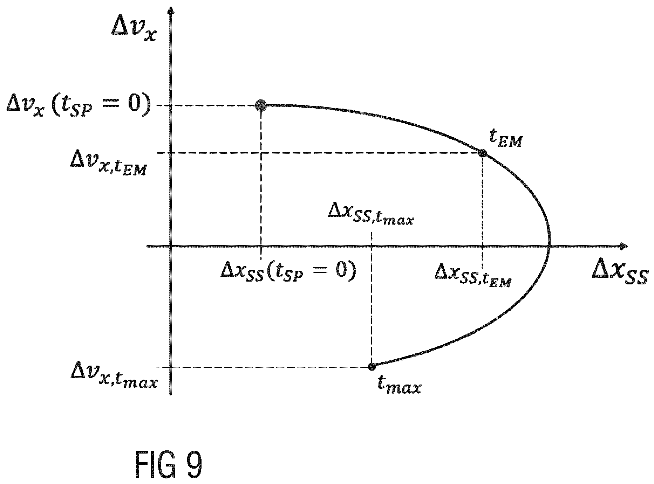

Figur 9 zeigt eine Darstellung eines relativen Längsdistanzverlaufs der Fahrzeugstoßstangen zur Berechnung eines minimalen Abstandes $d_{x,min}$ zwischen dem Fahrzeug EGO und dem entsprechenden weiteren Fahrzeug PE1 bis PE3, wenn keine Kollision zwischen diesen eintritt.

Kommt es zu keiner Kollision, so wird der minimale Abstand $d_{x,min}$, auch als minimale Längsdistanz bezeichnet, als weiteres Sicherheitsmaß S2 herangezogen. Dabei ist der minimale Abstand $d_{x,min}$ entweder im Einschermoment $t_{EM}$ oder im Moment der maximalen Spurwechseldauer $t_{max}$ minimal.

Insbesondere zeigt Figur 9 den Zusammenhang des minimalen Abstandes $d_{x,min}$ und der relativen Längsgeschwindigkeit $\Delta v_x(t_{SP} = 0)$ über das Spurwechselmanöver.

Die Verschiebung $t_{SP}$ des Starzeitpunktes zur Einleitung des Spurwechselmanövers des entsprechenden weiteren Fahrzeuges PE1 bis PE3 wird dabei auf Null gesetzt, da bei gleichzeitigem Start der beiden Spurwechselmanöver die meiste Zeit vorhanden ist, um eine relative Längsdistanz abzubauen.

Der Abstand der beiden zugewandten Fahrzeugstoßstangen im Einschermoment und Zeitpunkt der maximalen Spurwechseldauer ergibt sich in Abhängigkeit von der kritischsten Beschleunigung des entsprechenden weiteren Fahrzeuges PE1 bis PE3 je nach Ausgangssituation $\Delta x_{MM,init,PE_i}$, $\Delta v_{x,init,PE_i}$:

$$\Delta a_{x,data,max,n} = a_{x,Ego,n} - a_{x,PE,data,max} \; ; \; \Delta a_{x,data,min,n} = a_{x,Ego,n} - a_{x,PE,data,min} \tag{27}$$

$$\Delta x_{SS,t_{EM},\Delta a_{x,max}} = \Delta x_{MM,init,PE_i} - L + \Delta v_{x,init,PE_i} \, t_{EM} + \frac{\Delta a_{x,data,max,n}}{2} t_{EM}^2 \tag{28}$$

$$\Delta x_{SS,t_{max},\Delta a_{x,max}} = \Delta x_{MM,init,PE_i} - L + \Delta v_{x,init,PE_i} \, t_{max} + \frac{\Delta a_{x,data,max,n}}{2} t_{max}^2 \tag{29}$$

$$\Delta x_{SS,t_{EM},\Delta a_{x,min}} = \Delta x_{MM,init,PE_i} + L + \Delta v_{x,init,PE_i} \, t_{EM} + \frac{\Delta a_{x,data,min,n}}{2} t_{EM}^2 \tag{30}$$

$$\Delta x_{SS,t_{max},\Delta a_{x,min}} = \Delta x_{MM,init,PE_i} + L + \Delta v_{x,init,PE_i} \, t_{max} + \frac{\Delta a_{x,data,min,n}}{2} t_{max}^2 \tag{31}$$

Ein Minimum des minimalen Abstandes $d_{x,min}$ ergibt sich anschließend je nach Fallunterscheidung aus:

$$d_{x,min,n} = \begin{cases} min\big(|\Delta x_{SS,t_{EM},\Delta a_{x,min}}|, |\Delta x_{SS,t_{max},\Delta a_{x,min}}|\big), \; f\ddot{u}r \; a_{x,PE_i,max} < a_{x,PE,data,min} \\ 0, \; f\ddot{u}r \; a_{x,PE,data,min} \leq a_{x,PE,,min} \leq a_{x,PE,data,max} \\ \vee \; a_{x,PE,data,min} \leq a_{x,PE_i,max} \leq a_{x,PE,data,max} \\ min\big(|\Delta x_{SS,t_{EM},\Delta a_{x,max}}|, |\Delta x_{SS,t_{max},\Delta a_{x,max}}|\big), \; f\ddot{u}r \; a_{x,PE_i,min} > a_{x,PE,data,max} \end{cases} \tag{32}$$

Mittels des Verfahrens wird eine Sicherheitsbewertung für ein automatisiert fahrendes, insbesondere autonom fahrendes, Fahrzeug EGO ermöglicht.

Durch Veränderung der Längsbeschleunigung $a_{x,EGO,n}$ des Fahrzeuges EGO können die Längsbeschleunigungen $a_{x,PE}$ der weiteren Fahrzeuge PE1 bis PE3 als potentielle Einscherer, die für eine Kollision notwendig wären, so verschoben werden, dass sie sich außerhalb eines kritischen Bereiches befinden, der anhand der Realfahrdaten ermittelt wurden. Das Fahrzeug EGO ist somit in der Lage, das Risiko einer Kollision schon vor einem Spurwechselmanöver auf die mittlere Fahrspur F2 zu reduzieren oder den Beginn des Spurwechselmanövers bewusst zu verschieben, wodurch die Sicherheit für das Fahrzeug EGO und die weiteren Fahrzeuge PE1 bis PE3 erhöht werden kann.

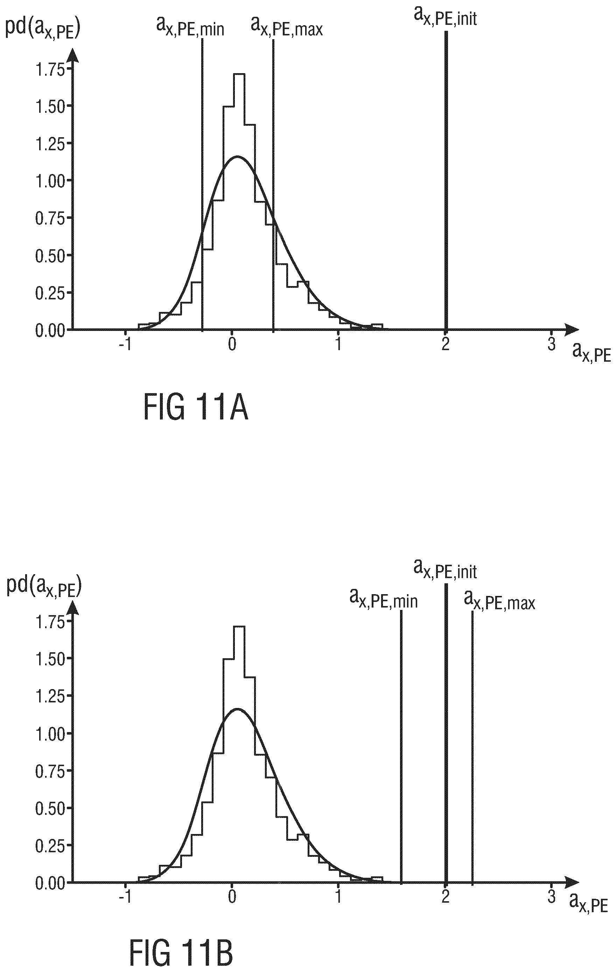

In Figur 11A ist ein Diagramm mit einer Kollisionswahrscheinlichkeitsdichte pd($a_{x,PE}$) ohne Berücksichtigung eines Ruckes j und ein weiteres Diagramm mit verschobenem Kollisionswahrscheinlichkeitsdichtebereich durch Anpassung einer Längsbeschleunigung $a_{x,EGO}$ des Fahrzeuges EGO dargestellt.

Dabei wird, wie oben beschrieben, angenommen, dass die initiale Längsbeschleunigung $a_{x,PE_i,init}$ der weiteren Fahrzeuge PE1 bis PE3 nicht exakt oder nur ungenau gemessen werden kann und wird für das hier beschriebene Verfahren mit Null angenommen.

Weiterhin ist es Ziel des Verfahrens, durch Anpassung einer Längsgeschwindigkeit des Fahrzeuges EGO die Längsbeschleunigungsgrenzen $a_{x,PE,min}$, $a_{x,PE,max}$ der weiteren Fahrzeuge PE1 bis PE3 in einen Bereich einer geringeren Wahrscheinlichkeit zu verschieben, um somit die Kollisionswahrscheinlichkeit $P_{Kollision}$ zu minimieren.

Hierzu wurde definiert, dass eine Auftrittswahrscheinlichkeit der jeweiligen Längsbeschleunigungen $a_{x,PE}$, die zu einer Kollision führen, gleichzeitig die einer Kollisionswahrscheinlichkeit $P_{Kollision}$ beschreibt beziehungsweise der Kollisionswahrscheinlichkeit $P_{Kollision}$ entspricht, da die Längsbeschleunigung $a_{x,PE}$ im direkten Zusammenhang mit einer Überlappung der Fahrzeugflächen und somit einer Kollision steht.

Dabei kann ein anhand der Figuren 11A und 11B beschriebenes Problem entstehen:

Wenn sich die initiale Längsbeschleunigung $a_{x,PE_i,init}$ eines der weiteren Fahrzeuge PE1 bis PE3 jedoch bereits in einem Bereich niedriger Auftrittswahrscheinlichkeiten befindet, kann es passieren, dass eine Optimierung der Längsbeschleunigung $a_{x,EGO}$ des Fahrzeuges EGO die Längsbeschleunigungsgrenzen $a_{x,PE,min}$, $a_{x,PE,max}$ des weiteren Fahrzeuges PE1 bis PE3 in einen Bereich verschiebt, welcher aufgrund seiner geringen Wahrscheinlichkeit aus statistischen Gesichtspunkten in Bezug auf die Längsbeschleunigung $a_{x,EGO}$ optimal ist, jedoch aufgrund einer tatsächlichen, insbesondere gemessenen, Ausgangssituation $\Delta x_{MM,init,PE_i}$, $\Delta v_{x,init,PE_i}$ die initiale Längsbeschleunigung $a_{x,PE_i,init}$ des weiteren Fahrzeuges PE1 bis PE3 beinhaltet oder sich dieser nähert und somit das Risiko einer Kollision besteht, sollte das weitere Fahrzeug PE1 bis PE3 die initiale Längsbeschleunigung $a_{x,PEi,init}$ gemittelt über einen Spurwechsel halten.

Gemäß Figur 11A berechnet sich die Kollisionswahrscheinlichkeit $P_{Kollision}$ wie folgt:

$$P_{Kollision} = \int_{a_{x,PE,min}}^{a_{x,PE,max}} pdf(a_{x,PE}) da_{x,PE} \approx 0{,}5 = 50\ \% \tag{33}$$

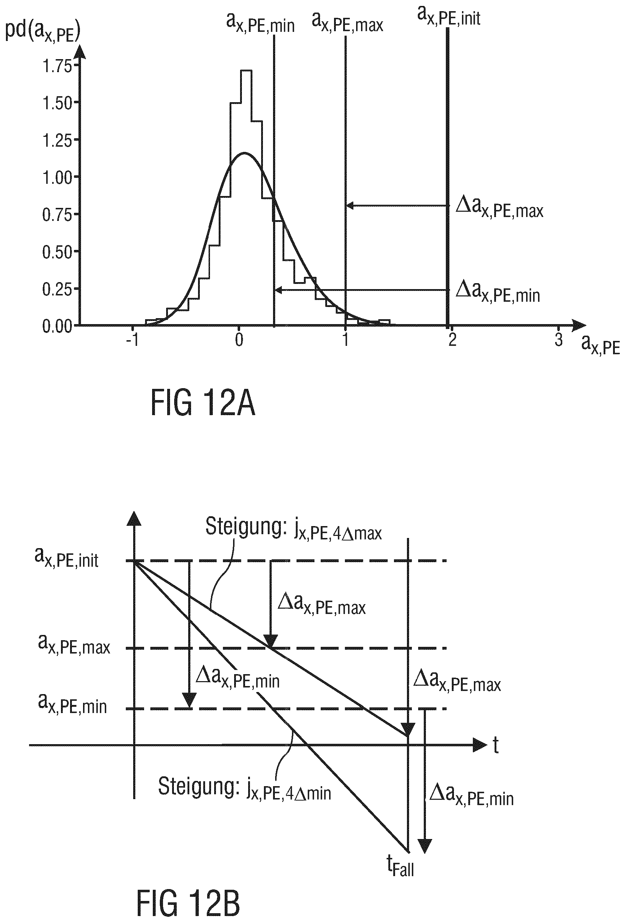

ohne Berücksichtigung des Ruckes j, wohingegen die Kollisionswahrscheinlichkeit $P_{Kollision}$ mit Berücksichtigung eines in den Figuren 12A bis 12C beschriebenen Ruckes j ≈ 0 beträgt.

In Figur 11B ist ein weiteres Diagramm gezeigt, bei welchem die Wahrscheinlichkeitsdichte $pd(a_{x,PE})$ durch Anpassung der Längsbeschleunigung $a_{x,EGO}$ verschoben ist.

Die Kollisionswahrscheinlichkeit $P_{Kollision}$ berechnet sich nach dem oben beschriebenen Verfahren wie folgt:

$$P_{Kollision} = \int_{a_{x,PE,min}}^{a_{x,PE,max}} pdf(a_{x,PE}) da_{x,PE} \approx 0 \tag{34}$$

und nach einem neuen Lösungsansatz ≈ 50 %.

Die Figuren 12a bis 12c zeigen einen alternativen oder zusätzlichen Lösungsansatz zur Ermittlung einer Kollisionswahrscheinlichkeit $P_{Kollision}$ unter Berücksichtigung des Ruckes j bei einer Längsbeschleunigung $a_{x,PE}$ der weiteren Fahrzeuge PE1 bis PE3. Der Ruck j stellt eine momentane zeitliche Änderungsrate einer Beschleunigung a dar.

Unter der Annahme, dass die initiale Längsbeschleunigung $a_{x,PEi,init}$ des weiteren Fahrzeuges PE1 bis PE3 ausreichend genau gemessen werden kann, kann eine Differenz zwischen der initialen Längsbeschleunigung $a_{x,PEi,init}$ und den beiden Längsbeschleunigungsgrenzen $a_{x,PE,min}$, $a_{x,PE,max}$ ermittelt, insbesondere berechnet, werden.

Mittels dieser Differenzen können der minimale Ruck $j_{x;PE4\Delta min}$ und der maximale Ruck $j_{x,PE,4\Delta max}$ berechnet werden, welcher gemittelt über den Spurwechsel aufgebracht werden muss, damit das weitere Fahrzeug PE1 bis PE3 in den Bereich der potentiellen Kollision eindringt. Diese Berechnung ist in den Figuren 12A und 12B veranschaulicht.

Der maximale Ruck $j_{x,PE,max}$ wird wie folgt berechnet:

$$j_{x,PE,4\Delta max} = 2^{\frac{a_{x,PE,max} - a_{x,PE,init}}{t_{Fall}}} = 2^{\frac{\Delta a_{x,PE,max}}{t_{Fall}}} \tag{35}$$

$t_{Fall} \in t_{max}$, $t_{EM}$ abhängig vom Berechnungsfall (21a) bis (21c) und (22d) bis (22f) zur Berechnung der Längsbeschleunigungsgrenzen $a_{x,PE,min}$, $a_{x,PE,max}$.

Der minimale Ruck $j_{x,PE,min}$ wird wie folgt berechnet:

$$j_{x,PE,4\Delta min} = 2^{\frac{a_{x,PE,min} - a_{x,PE,init}}{t_{Fall}}} = 2^{\frac{\Delta a_{x,PE,min}}{t_{Fall}}} \tag{36}$$

$t_{Fall} \in t_{max}$, $t_{EM}$ abhängig vom Berechnungsfall (21a) bis (21c) und (22d) bis (22f) zur Berechnung der Längsbeschleunigungsgrenzen $a_{x,PE,min}$, $a_{x,PE,max}$.

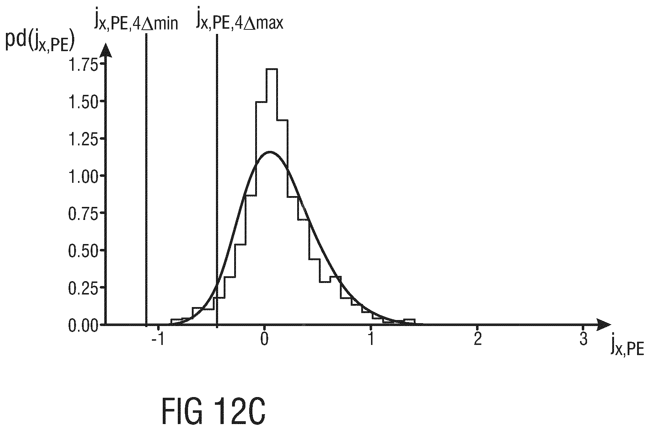

Anhand eines Datensatzes werden nach derselben Methode, wie in den oben beschriebenen Verfahrensschritten, Längsruckbereiche aus Mittelwerten der Längsbeschleunigungsänderung während eines Spurwechsels ermittelt und deren Auftrittswahrscheinlichkeit über eine Wahrscheinlichkeitsdichtefunktion beschrieben, wie in Figur 12C gezeigt ist.

Die ermittelten Werte für den maximalen Ruck $j_{x,PE,4\Delta max}$ und den minimalen Ruck $j_{x,PE,4\Delta min}$ werden dann als Integralgrenzen für die Wahrscheinlichkeitsdichtefunktion des Ruckes j bei einer Berechnung der Kollisionswahrscheinlichkeit $P_{Kollision}$ verwendet.

Im Vergleich zu den oben beschriebenen Verfahrensschritten wird bei diesem Lösungsansatz zusätzlich der Ruck j bei der Berechnung der Kollisionswahrscheinlichkeit $P_{Kollision}$ berücksichtigt. Die Längsbeschleunigung $a_{x,EGO}$ des Fahrzeuges EGO kann dadurch so optimiert werden, dass die minimale Längsbeschleunigung $a_{x,PE,min}$ und die maximale Längsbeschleunigung der weiteren Fahrzeuge PE1 bis PE3 einen Längsbeschleunigungsänderungsaufwand benötigen, der eine statistisch niedrige Auftrittswahrscheinlichkeit und damit niedrige Kollisionswahrscheinlichkeit besitzt.

Anders als oben beschrieben wird die Auftrittswahrscheinlichkeit des Ruckes j, welcher erforderlich ist, um eine mittlere Beschleunigung zu erreichen, die dann zu einer Kollision führt, als Kollisionswahrscheinlichkeit $P_{Kollision}$ genutzt und nicht die Auftrittswahrscheinlichkeit der Längsbeschleunigung $a_{x,PE}$.

**Patentansprüche**

1. Verfahren zur Sicherheitsbewertung eines Spurwechselmanövers im automatisierten Fahrbetrieb eines Fahrzeuges (EGO) mit einer Umgebungssensorik, wobei anhand erfasster Signale der Umgebungssensorik eine Umgebung des Fahrzeuges (EGO) und sich in dieser befindende Objekte detektiert werden, wobei

   - vor einem eingeleiteten Spurwechselmanöver des Fahrzeuges (EGO) von einer linken Fahrspur (F1) auf eine mittlere Fahrspur (F2) oder von einer rechten Fahrspur (F3) auf die mittlere Fahrspur (F2) eines mehrspurigen Fahrbahnabschnittes (F) mittels hypothetischer Spurwechselmanöver von weiteren Fahrzeugen (PE1 bis PE3) auf der rechten Fahrspur (F3) oder der linken Fahrspur (F1) ein Kollisionsrisiko ermittelt wird,
   - basierend auf einer maximalen Spurwechseldauer und eines Einschermomentes ($t_{EM}$) Längsbeschleunigungen ($a_{x,PE}$) der weiteren Fahrzeuge (PE1 bis PE3) ermittelt werden, die zu einer Kollision aufgrund einer Überlappung von Fahrzeugflächen des Fahrzeuges (EGO) und der weiteren Fahrzeuge (PE1 bis PE3) führen,
   - eine Durchführung des Spurwechselmanövers in Abhängigkeit einer relativen Längsposition ($\Delta x_{MM,init,PEi}$) des Fahrzeuges (EGO) zu den weiteren Fahrzeugen (PE1 bis PE3) und initialen relativen Längsgeschwindigkeiten ($\Delta v_{x,init,PEi}$) des Fahrzeuges (EGO) zu den weiteren Fahrzeugen (PE1 bis PE3) zum Beginn eines Spurwechselmanövers anhand einer Kollisionswahrscheinlichkeit ($P_{Kollision}$) als Sicherheitsmaß (S1) und eines minimalen Abstandes ($d_{x,min}$) bei Nichteintritt einer Kollision als weiteres Sicherheitsmaß (S2) bewertet wird,
   - bei einer Ermittlung der Kollisionswahrscheinlichkeit ($P_{Kollision}$) eine Höhe eines Ruckes (j) einer Längsbeschleunigung ($a_{x,PE}$) der weiteren Fahrzeuge (PE1 bis PE3) berücksichtigt wird und
   - die Längsbeschleunigung ($a_{x,EGO}$) des Fahrzeuges (EGO) derart optimiert wird, dass eine minimale Längsbeschleunigung ($a_{x,PE,min}$) und eine maximale Längsbeschleunigung ($a_{x,PE,max}$) der weiteren Fahrzeuge (PE1 bis PE3) einen Längsbeschleunigungsänderungsaufwand erfordern, welcher jeweils eine statistisch geringe Kollisionswahrscheinlichkeit ($P_{Kollision}$) aufweist,

   **dadurch gekennzeichnet, dass**
   die Kollisionswahrscheinlichkeit ($P_{Kollision}$) als Sicherheitsmaß (S1) anhand einer zuvor ermittelten Wahrscheinlichkeit erwartbarer Längsbeschleunigungen ($a_{x,PE}$) der weiteren Fahrzeuge (PE1 bis PE3), anhand einer Ausgangssituation ($\Delta x_{MM,init,PEi}$, $\Delta v_{x,init,PEi}$), anhand einer geometrischen Fahrzeuginformation des Fahrzeuges (EGO) und einer geometrischen Fahrzeuginformation der weiteren Fahrzeuge (PE1 bis PE3), anhand von Startzeitpunkten der hypothetischen Spurwechselmanöver der weiteren Fahrzeuge (PE1 bis PE3), einer Zeitdauer des Spurwechselmanövers und einer geplanten Längsbeschleunigung ($a_{x,EGO,n}$) des Fahrzeuges (EGO) ermittelt wird.

2. Verfahren nach Anspruch 1,
   **dadurch gekennzeichnet, dass** die beiden Sicherheitsmaße (S1, S2) modellbasiert ermittelt werden und mittels Änderung der Längsbeschleunigung ($a_{x,EGO,n}$) und/oder der Ausgangssituation ($\Delta x_{MM,init,PEi}$, $\Delta v_{x,init,PEi}$) des Fahrzeuges (EGO) zu einem nächstfahrenden weiteren Fahrzeug (PE1 bis PE3) die Kollisionswahrscheinlichkeit ($P_{Kollision}$) und der minimale Abstandes ($d_{x,min}$) bei einem durchgeführten Spurwechselmanöver beeinflusst wird.

3. Verfahren nach einem der vorhergehenden Ansprüche,
   **dadurch gekennzeichnet, dass** eine Bewertung des minimalen Abstandes ($d_{x,min}$) als weiteres Sicherheitsmaß (S2) anhand eines minimalen Längsabstandes einer Stoßstange des Fahrzeuges (EGO) zu einer Stoßstange des nächstfahrenden weiteren Fahrzeuges (PE1 bis PE3) erfolgt, wobei der minimale Abstand ($d_{x,min}$) während des Spurwechselmanövers gewählt wird, nachdem ermittelt wird, dass sich Querkoordinaten der Fahrzeuge (EGO, PE1 bis PE3) überschneiden.

**Claims**

1. Method for evaluating the safety of a lane-change maneuver in the automated driving mode of a vehicle (EGO) having an environmental sensor system, wherein the environment of the vehicle (EGO) and objects located therein are detected using signals recorded by the environmental sensor system, wherein

   - before the vehicle (EGO) initiates a lane-change maneuver from a left lane (F1) to a middle lane (F2) or from a right lane (F3) to the middle lane (F2) of a multi-lane stretch of road (F), a collision risk is determined by means of hypothetical lane-change maneuvers by other vehicles (PE1 to PE3) on the right lane (F3) or the left lane (F1),
   - on the basis of a maximum lane-change duration and a cutting-in torque ($t_{EM}$), longitudinal accelerations ($a_{x,PE}$) of the other vehicles (PE1 to PE3) are determined, which lead to a collision due to vehicle surfaces of the vehicle (EGO) and the other vehicles (PE1 to PE3) overlapping,

- performing the lane-change maneuver is evaluated depending on a longitudinal position ($\Delta x_{MM,init,PEi}$) of the vehicle (EGO) relative to the other vehicles (PE1 to PE3) and initial longitudinal speeds ($\Delta v_{MM,init,PEi}$) of the vehicle (EGO) relative to the other vehicles (PE1 to PE3) at the start of a lane-change maneuver using a collision probability ($P_{Kollision}$) as a safety measure (S1) and a minimum distance ($d_{x,min}$) for a collision to not occur as a further safety measure (S2),

- when determining the collision probability ($P_{Kollision}$), the intensity of a jerk (j) in a longitudinal acceleration ($a_{x,PE}$) of the other vehicles (PE1 to PE3) is taken into account, and

- the longitudinal acceleration ($a_{x,EGO}$) of the vehicle (EGO) is optimized in such a way that a minimum longitudinal acceleration ($a_{x,PE,min}$) and a maximum longitudinal acceleration ($a_{x,PE,max}$) of the other vehicles (PE1 to PE3) require a longitudinal acceleration change effort which has a statistically low collision probability ($P_{Kollision}$) in each case,

**characterized in that**

the collision probability ($P_{Kollision}$) as a safety measure (S1) is determined using a previously determined probability of expected longitudinal accelerations ($a_{x,PE}$) of the other vehicles (PE1 to PE3), using an initial situation ($\Delta x_{MM,init,PEi}$, $\Delta v_{MM,init,PEi}$), using geometric vehicle information of the vehicle (EGO) and geometric vehicle information of the other vehicles (PE1 to PE3), using start times of the hypothetical lane-change maneuvers of the other vehicles (PE1 to PE3), a duration of the lane-change maneuver and a planned longitudinal acceleration ($a_{x,EGO,n}$) of the vehicle (EGO).

2. Method according to claim 1,
**characterized in that** the two safety measures (S1, S2) are determined using a model-based approach and the collision probability ($P_{Kollision}$) and the minimum distance ($d_{x,min}$) during a lane-change maneuver are affected by changing the longitudinal acceleration ($a_{x,EGO,n}$) and/or the initial situation ($\Delta x_{MM,init,PEi}$, $\Delta v_{MM,init,PEi}$) of the vehicle (EGO) to a nearest moving other vehicle (PE1 to PE3).

3. Method according to either of the preceding claims,
**characterized in that** the minimum distance ($d_{x,min}$) as a further safety measure (S2) is evaluated using a minimum longitudinal distance between a bumper of the vehicle (EGO) and a bumper of the nearest moving other vehicle (PE1 to PE3), the minimum distance ($d_{x,min}$) being chosen during the lane-change maneuver after it has been determined that lateral coordinates of the vehicles (EGO, PE1 to PE3) overlap.

**Revendications**

1. Procédé pour l'évaluation de sécurité d'une manœuvre de changement de voie dans le mode de conduite automatisé d'un véhicule (EGO) comportant une technologie de capteurs environnementaux, dans lequel un environnement du véhicule (EGO) et des objets se trouvant dans celui-ci sont détectés à l'aide de signaux détectés de la technologie de capteurs environnementaux, dans lequel

- avant une manœuvre de changement de voie engagée du véhicule (EGO) d'une voie de circulation gauche (F1) à une voie de circulation centrale (F2) ou d'une voie de circulation droite (F3) à la voie de circulation centrale (F2) d'un tronçon de chaussée (F) à plusieurs voies, un risque de collision est déterminé au moyen de manœuvres de changement de voie hypothétiques d'autres véhicules (PE1 à PE3) sur la voie de circulation droite (F3) ou sur la voie de circulation gauche (F1),

- sur la base d'une durée de changement de voie maximale et d'un couple de rabattement ($t_{EM}$), des accélérations longitudinales ($a_{x,PE}$) des autres véhicules (PE1 à PE3) sont déterminées, lesquelles conduisent à une collision en raison d'un chevauchement de surfaces de véhicule du véhicule (EGO) et des autres véhicules (PE1 à PE3),

- une réalisation de la manœuvre de changement de voie est évaluée en fonction d'une position longitudinale relative ($\Delta x_{MM,init,PEi}$) du véhicule (EGO) par rapport aux autres véhicules (PE1 à PE3) et en fonction de vitesses longitudinales relatives initiales ($\Delta v_{x,init,PEi}$) du véhicule (EGO) par rapport aux autres véhicules (PE1 à PE3) au début d'une manœuvre de changement de voie à l'aide d'une probabilité de collision ($P_{Kollision}$) comme mesure de sécurité (S1) et d'une distance minimale ($d_{x,min}$) en l'absence de collision comme autre mesure de sécurité (S2),

- lors d'une détermination de la probabilité de collision ($P_{Kollision}$), une hauteur d'une secousse (j) d'une accélération longitudinale ($a_{x,PE}$) des autres véhicules (PE1 à PE3) est prise en compte, et

- l'accélération longitudinale ($a_{x,EGO}$) du véhicule (EGO) est optimisée de telle sorte qu'une accélération longitudinale minimale ($a_{x,PE,min}$) et une accélération longitudinale maximale ($a_{x,PE,max}$) des autres véhicules (PE1 à PE3) nécessitent un effort de modification d'accélération longitudinale qui présente respectivement une probabilité de collision ($P_{Kollision}$) statistiquement faible,

**caractérisé en ce que**

la probabilité de collision ($P_{Kollision}$) est déterminée comme mesure de sécurité (S1) à l'aide d'une probabilité préalablement déterminée d'accélérations longitudinales ($a_{x,PE}$) prévisibles des autres véhicules (PE1 à PE3), à l'aide d'une situation initiale ($\Delta x_{MM,init,PE_i}$, $\Delta v_{,init,PE_i}$), à l'aide d'une information de véhicule géométrique du véhicule (EGO) et d'une information de véhicule géométrique des autres véhicules (PE1 à PE3), à l'aide d'instants de départ des manœuvres de changement de voie hypothétiques des autres véhicules (PE1 à PE3), d'une durée de la manœuvre de changement de voie et d'une accélération longitudinale ($a_{x,EGO,n}$) prévue du véhicule (EGO).

2. Procédé selon la revendication 1,
   **caractérisé en ce que** les deux mesures de sécurité (S1, S2) sont déterminées sur la base d'un modèle et la probabilité de collision ($P_{Kollision}$) et la distance minimale ($d_{x,min}$) sont influencées par une manœuvre de changement de voie réalisée au moyen d'une modification de l'accélération longitudinale ($a_{x,EGO,n}$) et/ou de la situation initiale ($\Delta x_{MM,init,PE_i}$, $\Delta v_{x,init,PE_i}$) du véhicule (EGO) par rapport à un autre véhicule (PE1 à PE3) circulant le plus près.

3. Procédé selon l'une des revendications précédentes,
   **caractérisé en ce qu'**une évaluation de la distance minimale ($d_{x,min}$) comme autre mesure de sécurité (S2) est effectuée à l'aide d'une distance longitudinale minimale d'un pare-chocs du véhicule (EGO) par rapport à un pare-chocs de l'autre véhicule (PE1 à PE3) circulant le plus près, dans lequel la distance minimale ($d_{x,min}$) est choisie pendant la manœuvre de changement de voie après avoir déterminé que des coordonnées transversales des véhicules (EGO, PE1 à PE3) se chevauchent.

FIG 1

A1

$\Delta x_{init,PE_1} = -14{,}15m$
$\Delta v_{x,init,PE_1} = 4{,}35\frac{m}{s}$

$\Delta x_{init,PE_2} = -173{,}05m$
$\Delta v_{x,init,PE_2} = 4{,}25\frac{m}{s}$

$\Delta x_{init,PE_3} = -221{,}16m$
$\Delta v_{x,init,PE_3} = 2{,}03\frac{m}{s}$

Ego

$a_{x,EGO,0}$

PE1

PE2

PE3

$y[m]$

$x[m]$

$P_{Gkol,PE_1} = 10{,}5\%$
$d_{x,min,PE_1} = 0m$

$P_{Gkol,PE_2} = 0\%$
$d_{x,min,PE_2} = 130{,}75m$

$P_{Gkol,PE_3} = 0\%$
$d_{x,min,PE_3} = 190{,}61m$

A2

$\Delta x_{init,PE_1} = -14{,}15m$
$\Delta v_{x,init,PE_1} = 4{,}35\frac{m}{s}$

$\Delta x_{init,PE_2} = -173{,}05m$
$\Delta v_{x,init,PE_2} = 4{,}25\frac{m}{s}$

$\Delta x_{init,PE_3} = -221{,}16m$
$\Delta v_{x,init,PE_3} = 2{,}03\frac{m}{s}$

Ego

$a_{x,EGO,n}$

PE1

PE2

PE3

$y[m]$

$x[m]$

$P_{Gkol,PE_1} = 0\%$
$d_{x,min,PE_1} = 116{,}75m$

$P_{Gkol,PE_2} = 0\%$
$d_{x,min,PE_2} = 116{,}75m$

$P_{Gkol,PE_3} = 0\%$
$d_{x,min,PE_3} = 177{,}48m$

FIG 2

FIG 3

EP 4 519 134 B1

FIG 4

FIG 5

FIG 6

EP 4 519 134 B1

FIG 7

$$P_{Kol_{t_{SP}},n} = \int_{a_{x,PE_i,min}(t_{SP})}^{a_{x,PE_i,max}(t_{SP})} pdf(a_{x,PE})da_{x,PE} \cdot G_{SP,t_{SP}}$$

$$G_{SP} = m_{P_{SP}}t_{SP} + G_{SP=0}$$

FIG 8

FIG 9

FIG 10

FIG 11A

FIG 11B

FIG 12A

FIG 12B

FIG 12C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 8244408 B2
- EP 3281831 A1
- US 20100228419 A1
- DE 102019129879 A1
- DE 19647430 A1